# EUROPEAN PATENT SPECIFICATION

(11) **EP 2 768 779 B1**
(45) Date of publication and mention of the grant of the patent: **05.12.2018**
(21) Application number: 12775255.8
(22) Date of filing: 19.10.2012
(51) Int. Cl.: C02F 1/54, C02F 1/56, C02F 103/28

(54) **COMPOSITION COMPRISING A NON-IONIC SURFACTANT AND AN IONIC POLYMER**
ZUSAMMENSETZUNG ENTHALTEND EIN NICHTIONISCHES TENSID UND EIN IONISCHES POLYMER
COMPOSITION COMPRENANT UN AGENT TENSIOACTIF NON IONIQUE ET POLYMÈRE IONIQUE

(30) Priority: 19.10.2011 EP 11008418
(43) Date of publication of application: 27.08.2014
(73) Proprietor: Solenis Technologies Cayman, L.P., 8200 Schaffhausen (CH)
(72) Inventor: BIERGANNS, Patric, 47906 Kempen (DE); FISCHER, Werner Peter Karl, 47877 Willich (DE); HOUBEN, Jochen Josef, 47906 Kempen (DE); KARP, Jörg, 41569 Rommerskirchen (DE); KRÜGER, Frank, 47839 Krefeld (DE)
(74) Representative: LKGLOBAL Lorenz & Kopf PartG mbB Patentanwälte
(86) International application number: PCT/EP2012/070786
(87) International publication number: WO 2013/057267

(56) References cited:
- US-A- 5 684 107

## Description

The invention relates to compositions, preferably solid compositions, comprising a non-ionic surfactant and an ionic polymer, methods for their preparation and their use. The compositions are useful *inter alia* as flocculation auxiliaries for solid-liquid separation processes, for example in sludge dewatering/waste water purification and as retention aids or other additives in paper manufacture.

In the practice of solid-liquid separation the object is to achieve, by addition of flocculating auxiliaries, the best possible result in terms of the parameters dry substance of the solid and clarity of the filtrate, or in other words to bring about the most complete separation possible of solid from the liquid phase. Sludge dewatering on a chamber-type filter or in a decanter centrifuge can be regarded as examples of the importance of these parameters. Since the dried sludge must be transported and often put to beneficial use by thermal processing, the highest possible content of solid (dry-substance content) is desired. In addition, the separated filtrate must be delivered to disposal. The quality and simplicity of such disposal increase as the clarity of the filtrate increases, or in other words as the content of unflocculated solids remaining in the filtrate becomes lower. In such a case the filtrate can be discharged directly from a clarifying plant to the environment, and does not have to pass through the clarifying plant once again.

Flocculating auxiliaries are produced in the form of powdery granules or water-in-water polymer dispersions or water-in-oil emulsions, and prior to their use are added in dilute aqueous solutions to the medium to be flocculated. Powdery granules are preferred, since they can be transported more inexpensively by virtue of their almost anhydrous condition and, as in the water-in-oil emulsions, do not contain any oil or solvent constituents that are insoluble in water. Typically, solutions having a concentration of 0.01 to 0.5 wt.-% are prepared.

It is known from the prior art to employ water-in-water polymer dispersions containing ionic polyacrylamide derivatives as flocculating agents in solid/liquid separation processes. For example, WO 2002/046275, WO 2006/072294 and WO 2006/072295 describe the use of cationic water-in-water polymer dispersions as flocculation auxiliaries in solid sedimentation processes. The use of anionic water-in-water polymer dispersions as flocculating agents in such applications is known from WO 2005/092954. Powdery, water-soluble, cationic polymers for solid-liquid separation are known from WO 2005/023885.

However, in case of using solid forms, which are often preferred over the liquid ones due to lower transportation costs and higher storage stability, some of these show a clear tendency to cause or stabilize foam during their make-down or in the application processes, such as solid/liquid separation processes. These foams can slow the processes down, disturb them or even make the use of powdered flocculation auxiliaries impossible. Therefore, in a lot of these applications an additional defoaming aid has to be used.

These additional defoaming aids typically consist predominantly of mineral oils and require an additional storage. Mixing such defoaming agent with a solid flocculating auxiliary impairs the flowability of the flocculating auxiliary and may even result in a complete loss of flowability. Consequently, these defoaming agents have to be introduced into the centrate (filtrate) via additional dosing points, e.g. an additional pump. The necessity to use an additional defoaming agent is thus always associated with costly installation efforts and considerable additional costs.

Flocculating auxiliaries that are commercially available in form of water-in-oil emulsions do not have such disadvantages since they already contain such mineral oil with defoaming properties. However, these water-in-oil emulsions have the disadvantage that they do not contain the flocculating auxiliary in concentrated form. Therefore, much larger volumes have to be prepared, transported and stored. Further, the storage stability of such water-in-oil polymer emulsions is typically reduced compared to solid forms of polymeric flocculating auxiliaries.

Anti-foaming agents based on oil-in-water emulsions are known from patent applications US 2006/0111453 and US 2010/0212847.

US 5,684,107 discloses the manufacture of agglomerated polymer particles of finely divided polymers by azeotropic dewatering of water-in-oil emulsions of polymers in the presence of polyalkylene glycols. The polymers are preferably cross-linked by adding considerable amounts of cross-linkers, preferably 50 to 5,000 ppm. A skilled artisan is fully aware that under the conditions of azeotropic dewatering (which is generally a thermal process) in presence of polyalkylene glycol crosslinking and thereby gel formation takes place with anionic polymers such as polyacrylic acid, as the polyalkylene glycol reacts with the acid groups at the polymer backbone. Thus, even if no cross-linker is added to the reaction mixtures, the anionic products according to US 5,684,107 exhibit a comparatively high degree of branching and cross-linking. Furthermore, the agglomerated polymer particles always contain residual amounts of oil, which is detrimental for various reasons, in particular ecological reasons.

It is an object of the invention to provide compositions containing ionic polymeric flocculation auxiliaries which have advantages compared to the compositions of the prior art. In particular, the handling and metering of the composition should be simple and the composition should not have any negative influences on the performance or application properties of flocculating auxiliary contained therein.

This object has been achieved by the subject-matter of the patent claims.

It has been surprisingly found that suitable non-ionic surfactants with anti-foaming properties and suitable ionic polymer flocculating auxiliaries can be combined in form of a composition, preferably a solid composition, without impairing the performance of the individual components. Further, it has been surprisingly found that the relative weight ratio of the non-ionic surfactant to the ionic polymer can be specifically tailored so that foaming can be efficiently suppressed at minimized consumption of non-ionic surfactant. Thus, separate addition and individual dose adjustment of non-ionic surfactant is not necessary when utilizing the composition according to the invention.
Figure 1 shows the foam height versus time as determined in a comparative foaming test between the composition according to the invention (Example) and a commercial flocculating auxiliary (comparative Example).
Figure 2 shows the gel formation of various polymer compositions in dependence on the content of cross-linkers.

A first aspect of the invention relates to a composition comprising
(i) a non-ionic surfactant R¹-O-A-O-R²,
   wherein
   - the residue -O-A-O- is derived from a polyalkylene glycol HO-A-OH that comprises 2-130 monomer units derived from ethylene glycol and 0-60 monomer units derived from propylene glycol; and
   - R¹ is selected from the group consisting of -H, -(C8-C20)-alkyl, -(C8-C20)-alkenyl, - (C=O)-(C8-C20)-alkyl and -(C=O)-(C8-C20)-alkenyl, and
      R² is selected from the group consisting of -H, -(C₁-C₆)-alkyl, -benzyl, -(C=O)-(C₈-C₂₀)-alkyl and -(C=O)-(C₈-C₂₀)-alkenyl; and
(ii) a water-soluble ionic polymer,
   wherein the water-soluble ionic polymer is derived from a monomer composition containing
   a) one or more non-ionic ethylenically unsaturated monomers, and/or
   b) one or more cationic ethylenically unsaturated monomers, and/or
   c) one or more anionic ethylenically unsaturated monomers; and
   wherein the water-soluble ionic polymer is derived from a monomer composition
   (i) not comprising any cross-linking monomers, or
   (ii) containing not more than 50 ppm cross-linking monomers, relative to the total content of monomers in the monomer composition;
wherein the non-ionic surfactant R¹-O-A-O-R² is present in an amount of from 0.05 wt.-% to 2.0 wt.-%, based on the total weight of the composition; and
wherein the relative weight ratio of the non-ionic surfactant R¹-O-A-O-R² to the ionic polymer is within the range of from 0.05 : 100 to 2 : 100.

When the monomer composition contains cross-linking monomers or when after polymerization of the monomers further reactants are added in order to achieve cross-linking in a polymer-analogous reaction, the content of said cross-linking monomers and reactants, respectively, is preferably at most 45 ppm, more preferably at most 40 ppm, still more preferably at most 40 ppm, yet more preferably at most 35 ppm, even more preferably at most 30 ppm, most preferably at most 25 ppm, and in particular at most 20 ppm, relative to the total content of monomers in the monomer composition.

In a preferred embodiment, the composition is a liquid, preferably an aqueous composition, in particular a water-in-water polymer dispersion.

Water-in-water polymer dispersions are well known in the art. In this regard it can be referred to, e.g., H. Xu et al., Drug Dev Ind Pharm., 2001 , 27(2), pp 171 -4; K.A. Simon et al., Langmuir., 2007, 30;23(3), 1453-8; P. Hongsprabhas, International Journal of Food Science & Technology, 2007, 42(6), 658-668; D. Gudlauski, Paper Age, May/June 2005, pp 36 f, USA 2004/0034145, US-A 2004/0046158, US-A 2004/021 1932, US-A 2005/0242045, US-A 2006/01 12824 and US-A 2007/0203290.

The water content of the water-in-water polymer dispersion may vary from 0.01 to 99.99 wt.-%. In a preferred embodiment, the water content is at most 65 wt.-%, more preferably at most 60 wt.-%, still more preferably at most 55 wt.-%, yet more preferably at most 50 wt.-%, most preferably below 50 wt.-%, and in particular at most 45 wt.-%, based on the total weight of the water-in-water polymer dispersion.

In an especially preferred embodiment, however, the composition is a solid, in particular in form of a powder or granules. In this embodiment, the moisture content is preferably not exceeding 12 wt.-%, and particularly preferably not exceeding 10 wt.-%.

In this regard, "monomer units derived from" means that the polyalkylene glycol HO-A-OH comprises repetition units, i.e., repetition units are incorporated in the polymer backbone of the polyalkylene glycol HO-A-OH, which repetition units can be imagined to be formed from the corresponding monomers in the course of a polycondensation reaction. This does not mean that such polycondensation can actually take place, but shall only mean that such polycondensation reaction can be performed by imagination. For example, when the polyalkylene glycol HO-A-OH is derived from ethylene glycol and propylene glycol, the following repetition units are incorporated in the polymer backbone:

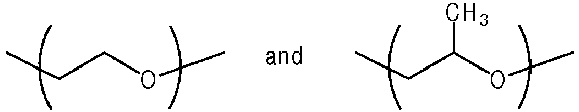

The non-ionic surfactant R¹-O-A-O-R² can preferably also be regarded as being consisting of a polyoxyalkylene chain terminated at one chain end with the substituent R¹ and at the other chain end with the substituent R².

For the purpose of the specification, the term "alkylene" shall mean any saturated linear or branched hydrocarbon having two binding partners, such as -CH₂CH₂-, -CH₂CH₂CH₂- and - CH₂CH(CH₃)CH₂-.

For the purpose of the specification, "alkyl" shall mean any saturated linear or branched hydrocarbons comprising one or more double bonds and having a single binding partner, including C₁₋₇-alkenyls such as ethenyl, propenyl, 1-butenyl, 2-butenyl, 3-butenyl, 2-methylpropenyl, 1-pentenyl, 2-pentenyl, 3-pentenyl, 4-pentenyl, 1-methyl-1-butenyl, 2-methyl-1 butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1 dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-heptenyl, and the like; and including C₈₋₂₀-alkenyls such as 1-octenyl, 1 nonenyl, 1-decenyl, 1-undecenyl, 1-dodecenyl, 9-cis-dodecenyl (lauroleyl), 1-tridecenyl, 1-tetradecenyl, 9-cis-tetradecenyl (myristoleyl), 1 pentadecenyl, 1 hexadecenyl, 9-cis-hexadecenyl (palmitoleinyl), 1-heptadecenyl, 1-octadecenyl, 6-cis-octadecenyl (petroselinyl), 6-trans-octadecenyl (petroselaidinyl), 9-cis-octadecenyl (oleyl), 9-trans-octadecenyl (elaidinyl), 11-cis-octadecenyl (vaccenyl), 9-cis-12-cis-octadecadienyl (linoleyl), 9-trans-12-trans-octadecadienyl (elaidolinoleyl), 9-cis-12-cis-15-cis-octadecatrienyl (alpha-linolenyl), 6-cis-9-cis-12-cis-octadecatrienyl (gamma-linolenyl), 8-trans-10-trans-12-cis-octadecatrienyl, 9-trans-12-trans-15-trans-octadecatrienyl (elaidolinolenyl), 9-cis-trans-13-trans-octadecatrienyl (alpha-eleostearinyl), 9-trans-11-trans-13-trans-octadeca-trienyl (beta-eleostearinyl), 9-cis-11trans-13-cis-octadecatrienyl (punicyl), 9-,11-,13-,15-octadecatetraenyl (parinaryl), 1 nonadecenyl, 11-cis-eicosenyl (icosenyl), 9-cis-eicosenyl (gadoleinyl), 5-,11-,14-eicosatrienyl, all-cis-5-,8-,11-,14-eicosatetraenyl (arachidonyl), and all-cis-5-,8-,11-,14-,17-eicosapentaenyl (timnodonyl) and the like.

If monomers units derived from a mixture of at least two different alkylene glycols are present, the monomer units can be present in any order. In a preferred embodiment, the two different monomer units are present in form of two or more, preferably two or three separate blocks, i.e. the polyalkylene glycol HO-A-OH from which the residue O-A-O- is derived from is preferably a diblock copolymer or a triblock copolymer. The separate blocks can be regarded as homopolymer subunits linked to each other by covalent bonds.

The residue -O-A-O- is derived from a polyalkylene glycol HO-A-OH that comprises 2-130 monomer units derived from ethylene glycol and 0-60 monomer units derived from propylene glycol. Preferably, if R¹ and R² both are hydrogen, the residue -O-A-O- is preferably derived from a polyalkylene glycol HO-A-OH that preferably comprises at least one monomer unit derived from propylene glycol.

The residue -O-A-O- is derived from a polyalkylene glycol HO-A-OH that comprises 2-130 monomer units derived from ethylene glycol and 1 -60 monomer units derived from propylene glycol.

Preferably, the relative weight ratio of the monomer units derived from ethylene glycol and the monomer units derived from propylene glycol is within the range of from 99:1 to 1 :99, more preferably within the range of from 75:1 to 1 :75, still more preferably within the range of from 50:1 to 1 :50, yet more preferably within the range of from 20:1 to 1 :20, and most preferably within the range of from 10:1 to 1 :10.

The monomer units can be present in any order or in form of two or more, preferably two or three separate blocks.

In a preferred embodiment, the monomer units are present in form of two blocks, one block comprising only monomer units derived from ethylene glycol and the other block comprising only monomer units derived from propylene glycol.

In another preferred embodiment, the monomer units are present in form of three blocks, one middle block comprising only monomer units derived from propylene glycol and two outer blocks comprising only monomer units derived from ethylene glycol.

In still another preferred embodiment, the monomer units are present in form of three blocks, one middle block comprising only monomer units derived from ethylene glycol and two outer blocks comprising only monomer units derived from propylene glycol.

Especially preferred non-ionic surfactants R¹-O-A-O-R² are selected from the group consisting of
(i) ethoxylated, saturated or unsaturated (C₈-C₂₀) -fatty alcohols, preferably obtainable by etherifying saturated or unsaturated (C₈-C₂₀) -fatty alcohols with ethylene oxide so that a polyethylene glycol moiety is linked to the hydroxyl group of the saturated or unsaturated (C₈-C₂₀)-fatty alcohols via an ether bond; wherein the polyethylene glycol moiety preferably comprises 2 to 25 ethylene oxide units (-CH₂CH₂₀-), more preferably 2 to 20 ethylene oxide units;
(ii) ethoxylated and propoxylated, saturated or unsaturated (C₈-C₂₀) -fatty alcohols, preferably obtainable by etherifying saturated or unsaturated (C₈-C₂₀)-fatty alcohols with ethylene oxide and propylene oxide, sequentially or simultaneously, so that a polyalkylene glycol moiety is linked to the hydroxyl group of the saturated or unsaturated (C₈-C₂₀) -fatty alcohols via an ether bond; wherein the polyalkylene glycol moiety preferably comprises 2 to 130 ethylene oxide units (-CH₂CH₂₀-) and 1 to 60 propylene oxide units (-CH₂CH(CH₃)0-); wherein the units (-CH₂CH₂₀-) and (-CH₂CH(CH₃)0-) can be present in any order or in form of two separate blocks; surfactants of this type are e.g. known and commercially available known under the trade names "Antispumin® HE" and "Plurafac®";
(iii) ethoxylated, saturated or unsaturated (C₈-C₂₀)-fatty alcohols of type (i) and/or the ethoxylated and propoxylated saturated or unsaturated (C₈-C₂₀) -fatty alcohols of type (ii) end-capped by a -(CrC6)-alkyl or benzyl group, preferably n-butyl or benzyl group, preferably obtainable by etherifying the ethoxylated, saturated or unsaturated (C₈-C₂₀)- fatty alcohols of type (i) and/or the ethoxylated and propoxylated saturated or unsaturated (C₈-C₂₀) -fatty alcohols of type (ii) with -(d-C₆)-alkyl halide or benzyl halide, preferably n-butyl halide or benzyl halide, in presence of a base; examples of this type include the surfactants known and commercially available under the trade name "Dehypon® LT" and the end-capped surfactants known and commercially available under the trade name "Plurafac®".
(iv) ethoxylated and propoxylated glycols, obtainable by etherifying ethylene glycol, propylene glycol, with ethylene oxide and propylene oxide so that a polyalkylene glycol moiety is linked to at least one hydroxyl group of the glycol via an ether bond; wherein the reaction product preferably comprises 1 to 130 ethylene oxide units (-CH₂CH₂O-) and 1 to 60 propylene oxide units (-CH₂CH(CH₃)O-); wherein the units (-CH₂CH₂O-) and (-CH₂CH(CH₃)O-) can be present in any order, preferably in form of two or more separate blocks; examples of this type include the surfactants known and commercially available under the trade name "Pluronic®"; and
(v) esters of saturated or unsaturated (C₈-C₂₀)-fatty acids and the non-ionic surfactants of type (I) or (II) and/or mono- or diesters of saturated or unsaturated (C₈-C₂₀)-fatty acids and the non-ionic surfactants of type (IV), preferably obtainable by
   - esterifying a non-ionic surfactant of type (I) or (II) or (IV) with a saturated or unsaturated (C₈-C₂₀)-fatty acid; or
   - ethoxylating saturated or unsaturated (C₈-C₂₀)-fatty acids with ethylene oxide so that a polyethylene glycol moiety is linked to the hydroxyl group of the saturated or unsaturated (C₈-C₁₈)-fatty acids via an ester bond; wherein the polyethylene glycol moiety preferably comprises 2 to 25 ethylene oxide units (-CH₂CH₂O-), more preferably 2 to 20 ethylene oxide units; or
   - alkoxylating saturated or unsaturated (C₈-C₂₀)-fatty acids with ethylene oxide and propylene oxide, sequentially or simultaneously, so that a polyalkylene glycol moiety is linked to the hydroxyl group of the saturated or unsaturated (C₈-C₂₀)-fatty acids via an ester bond; wherein the polyalkylene glycol moiety preferably comprises 2 to 130 ethylene oxide units (-CH₂CH₂O-) and 1 to 60 propylene oxide units (-CH₂CH(CH₃)O-); wherein the units (-CH₂CH₂O-) and (-CH₂CH(CH₃)O-) can be present in any order, preferably in form of two or more separate blocks.

Preferred saturated (C₈-C₂₀)-fatty alcohols are selected from the group consisting of 1-octanol (capryl alcohol), 2-ethyl hexanol, 1-nonanol, 1-dodecanol (capric alcohol), 1-undecanol, 1-dodecanol (lauryl alcohol), 1-tridecanol, isotridecanol, 1-tetradecanol (myristyl alcohol), 1-pentadecanol (pentadecyl alcohol), 1-hexadecanol (cetyl alcohol), heptadecyl alcohol, 1-octadecanol (stearyl alcohol), isostearyl alcohol, nonadecyl alcohol, arachidyl alcohol and mixtures thereof.

Preferred unsaturated (C₈-C₂₀)-fatty alcohols are selected from the group consisting of palmitoleyl alcohol, elaidyl alcohol, oleyl alcohol, linoleyl alcohol, elaidolinoleyl alcohol, linolenyl alcohol, elaidolinolenyl alcohol, ricinoleyl alcohol, and mixtures thereof.

Preferred saturated (C₈-C₂₀)-fatty acids are selected from the group consisting of octanoic acid (caprylic acid), nonanoic acid, decanoic acid (capric acid), dodecanoic acid (lauric acid), tetradecanoic acid (myristic acid), pentadecanoic acid, hexadecanoic acid (palmitic acid), heptadecanoic acid (margaric acid), octadecanoic acid (stearic acid), nonadecanoic acid, icosanoic acid (arachidic acid) and mixtures thereof.

Preferred unsaturated (C₈-C₂₀)-fatty acids are selected from the group consisting of myristoleic acid, palmitoleic acid, sapienic acid, oleic acid, elaidic acid, vaccenic acid, linoleic acid, lenoelaidic acid, alpha-linolenic acid, eicosenoic acid, arachidonic acid, eicosapentaenoic acid, and mixtures thereof.

According to the invention, R¹ is selected from the group consisting of -H, -(C₈-C₂₀)-alkyl, -(C₈-C₂₀)-alkenyl, -(C=O)-(C₈-C₂₀)-alkyl and -(C=O)-(C₈-C₂₀)-alkenyl, and R² is selected from the group consisting of -H, -(C₁-C₆)-alkyl, -benzyl, -(C=O)-(C₈-C₂₀)-alkyl and -(C=O)-(C₈-C₂₀)-alkenyl.

In a preferred embodiment, R¹ is -(C₈-C₂₀)-alkyl or -(C₈-C₂₀)-alkenyl and R² is -H, i.e. the non-ionic surfactant R¹-O-A-O-R² is preferably of type (i) or (ii).

In another preferred embodiment, R¹ is -(C₈-C₂₀)-alkyl or -(C₈-C₂₀)-alkenyl and R² is -(C₁-C₆)-alkyl or -benzyl, i.e. the non-ionic surfactant R¹-O-A-O-R² is preferably of type (iii).

In still another preferred embodiment, R¹ is -(C₈-C₂₀)-C(=O)-alkyl or -(C₈-C₂₀)-C(=O)-alkenyl and R² is selected from -H, -(C₈-C₂₀)-C(=O)-alkyl and -(C₈-C₂₀)-C(=O)-alkenyl, i.e. the non-ionic surfactant R¹-O-A-O-R² is a (C₈-C₂₀)-fatty acid mono- or diester, preferably of type (v).

In yet another preferred embodiment, R¹ and R² stand for -H; i.e. the non-ionic surfactant R¹-O-A-O-R² is preferably of type (vi).

In a preferred embodiment, at least one of R¹ and R² stands for -H.
In a preferred embodiment, the surfactant R¹-O-A-O-R² can be represented by the general formula (A) 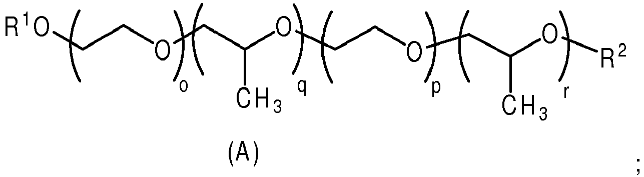 wherein
R¹ is selected from the group consisting of -H, -(C₈-C₂₀)-alkyl, -(C₈-C₂₀)-alkenyl, -(C=O)-(C₈-C₂₀)-alkyl and -(C=O)-(C₈-C₂₀)-alkenyl,
R² is selected from the group consisting of -H, -(C₁-C₆)-alkyl, -benzyl, -(C=O)-(C₈-C₂₀)-alkyl and -(C=O)-(C₈-C₂₀)-alkenyl,

o and p are integers of from 0 to 130, and the sum of o and p is within the range of from 2 to 130; q and r are integers of from 0 to 60; and the sum of q and r is within the range of from 0 to 60; preferably with the proviso that if R¹ and R² are both H, the sum of q and r may not be 0.

Preferably, at least one of the integers o, p, q and r is 0; i.e. the polyalkylene glycol HO-A-OH from which the residue -0-A-O- is derived from is preferably a homopolymer, a diblock copolymer or a triblock copolymer.

In a preferred embodiment, q, p and r are 0; i.e. the polyalkylene glycol HO-A-OH from which the residue -0-A-O- is derived from is a homopolymer.

In another preferred embodment, either q or p is 0; i.e. the polyalkylene glycol HO-A-OH from which the residue -0-A-O- is derived from is a diblock copolymer.

In still another preferred embodiment, either o or r is 0; i.e. the polyalkylene glycol HO-A-OH from which the residue -0-A-O- is derived from is a triblock copolymer.

Preferably, the average molecular weight of the surfactant is within the range of from 250 to 50.000 g/mol, more preferably within the range of from 500 to 25.000 g/mol, still more preferably within the range of from 1 .000 to 20.000 g/mol, and most preferably within the range of from 2.000 g/mol to 10.000 g/mol.

Preferably, the surfactant has a HLB not exceeding 14, more preferably not exceeding 12 (for the definition of the HLB value, see W.C. Griffin, Journal of the Society of the Cosmetic Chemist, 1 (1950), 31 1).

The content of the surfactant is within the range of from 0.05 to 2.0 wt.-% preferably in the range of from 0.1 to 1.0 wt.-%, based on the total weight of the composition. The composition according to the invention comprises an ionic polymer.

In a preferred embodiment, the content of the ionic polymer is within the range of from 40 to 99.995 wt.-%, more preferably 50 to 99.99 wt.-%, still more preferably 60 to 99.99 wt.-%, yet more preferably 75 to 99.99 wt.-%, most preferably 80 to 99.8 wt.-%, and in particular 85.0 to 99.7 wt.-%, based on the total weight of the composition.

Preferably, the ionic polymer can serve as coagulant and/or flocculating auxiliary. Chemical coagulation, the alteration of suspended and colloidal particles so they adhere to each other, is one type of chemical treatment process. Coagulation is a process that causes the neutralization of charges or a reduction of the repulsion forces between particles. Flocculation is the aggregation of particles into larger agglomerations ("floes"). Coagulation is virtually instantaneous, while flocculation requires some time for the floes to develop.

Preferably, the ionic polymer is water-soluble or water-swellable.

For the purpose of the specification, the term "water-soluble", particularly when it relates to the water-solubility of polymers, preferably refers to a solubility in pure water at ambient temperature of at least 1 .0 gl⁻¹, more preferably at least 2.5 gl⁻¹, still more preferably at least 5.0 gl⁻¹, yet more preferably at least 10.0 gl⁻¹, most preferably at least 25.0 gl⁻¹ and in particular at least 50.0 gl⁻¹. For the purpose of the specification, the term "water-soluble", particularly when it relates to the water-solubility of monomers, preferably refers to a solubility in pure water at ambient temperature of at least 10 gl⁻¹, more preferably at least 25 gl⁻¹ , still more preferably at least 50 gl⁻¹, yet more preferably at least 100 gl⁻¹ , most preferably at least 250 gl⁻¹ and in particular at least 500 gl⁻¹.

For the purpose of the specification, the term "water-swellable" preferably means that the polymer, while not water-soluble, absorbs an appreciable amount of water. Typically, the weight of the polymer increases by at least 2 wt.-%, preferably at least 5 wt.-%, after being immersed in water at room temperature, e.g., 25°C, for 1 hour, more preferably by about 60 to about 100 times its dry weight.

The relative weight ratio of the non-ionic surfactant R¹-O-A-O-R² to the ionic polymer is within the range of from 0.05 : 100 to 2 : 100, preferably within the range of from 0.1 : 100 to 1 : 100.

The water-soluble ionic polymer is derived from a monomer composition containing
a) one or more non-ionic ethylenically unsaturated monomers, and/or
b) one or more cationic ethylenically unsaturated monomers, and/or
c) one or more anionic ethylenically unsaturated monomers.

In this regard, "derived from" means that the polymer backbone of the ionic polymer comprises repetition units, i.e., repetition units are incorporated in the polymer backbone of the ionic polymer, which repetition units are formed from the corresponding monomers in the course of the polymerization reaction. For example, when the ionic polymer is derived from dimethylaminopropyl acrylamide quaternized with methylchloride (= DIMAPA quat.), the following repetition unit is incorporated in the polymer backbone:

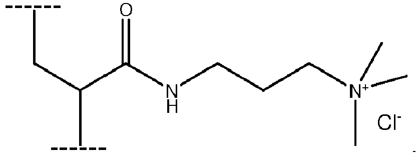

Suitable non-ionic ethylenically unsaturated monomers include non-ionic monomers according to general formula (I): 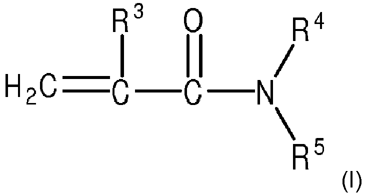 wherein
R³ means hydrogen or C₁-C₃-alkyl, and
R⁴ and R⁵ mean, independently of each other, hydrogen, -(C₁-C₅)-alkyl or -(C₁-C₅)-hydroxyalkyl.

Examples of non-ionic monomers of general formula (I) include (meth)acrylamide, N-methyl-(meth)acrylamide, N-isopropyl(meth)acrylamide and N,N-substituted (meth)acryl amides such as N,N-dimethyl(meth)acrylamide, N,N-diethyl(meth)acrylamide, N-methyl-N-ethyl-(meth)acrylamide and N-hydroxyethyl(meth)acrylamide. Especially preferred is acrylamide.

For the purpose of the specification, the term "(alk)acrylate" shall refer to alkacrylate as well as acrylate. In analogy, the term "(meth)acrylate" shall refer to methacrylate as well as acrylate.

Further suitable non-ionic ethylenically unsaturated monomers include non-ionic amphiphilic monomers according to general formula (II) 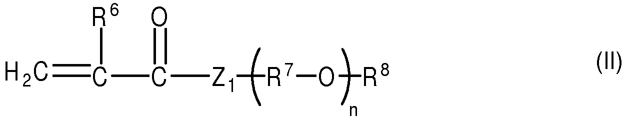 wherein
Z₁ means O, NH or NR⁹ with R⁹ being C₁-C₃-alkyl,
R⁶ means hydrogen or C₁-C₃-alkyl,
R⁷ means C₂-C₆-alkylene,
R⁸ means hydrogen, C₈-C₃₂-alkyl, C₈-C₃₂-aryl and/or C₈-C₃₂-aralkyl, and
n means an integer between 1 and 50.

Examples of non-ionic amphiphilic monomers according to general formula (II) include reaction products of (meth)acrylic acid and polyethylene glycols (10 to 50 ethylene oxide units), which are etherified with a fatty alcohol, or the corresponding reaction products with (meth)acrylamide.

Suitable cationic ethylenically unsaturated monomers include cationic monomers according to general formula (III) 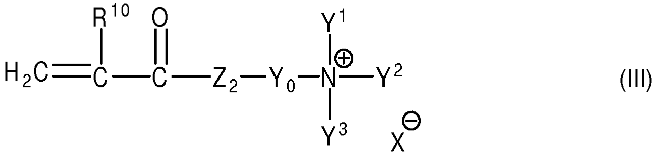 wherein
R¹⁰ means hydrogen or C₁-C₃-alkyl;
Z₂ means O, NH or NR¹¹ with R¹¹ being C₁-C₃-alkyl; and
Y₀ means C₂-C₆-alkylene, possibly substituted with one or more hydroxy groups,
Y₁, Y₂, Y₃, independently of each other, mean C₁-C₆-alkyl, and
X⁻ means halogen, pseudo-halogen, acetate or SO₄CH₃⁻.

Preferably, Y₁, Y₂ and Y₃ are identical, preferably methyl. In a preferred embodiment, Z₂ is O or NH, Y₀ is ethylene or propylene, R¹⁰ is hydrogen or methyl, and Y₁, Y₂ and Y₃ are methyl.

The cationic ethylenically unsaturated monomer according to general formula (III) may be an amide (Z₂ = NH), e.g., dimethylaminopropyl acrylamide quaternized with methylchloride (DIMAPA quat). Preferably, however, the cationic ethylenically unsaturated monomer according to general formula (II) is an ester (Z₂ = O), particularly dimethylaminoethyl (meth)-acrylate quaternized with methylchloride (ADAME quat.).

Preferred cationic ethylenically unsaturated monomers are cationic radically polymerizable (alk)acrylic acid esters, (alk)acrylic acid thioesters and (alk)acrylic acid amides. Preferably, the aforementioned cationic monomers comprise 6 to 25 carbon atoms, more preferably 7 to 20 carbon atoms, most preferably 7 to 15 carbon atoms and in particular 8 to 12 carbon atoms. Still more preferably, the cationic ethylenically unsaturated monomer according to general formula (III) is selected from the group consisting of methyl chloride quaternized ammonium salts of dimethylaminomethyl(meth)acrylate, dimethylaminoethyl(meth)acrylate, dimethylaminopropyl(meth)acrylate, dimethylaminomethyl(meth)acrylamide, dimethylaminoethyl(meth)acrylamide and dimethylaminopropyl(meth)acrylamide.

Suitable anionic ethylenically unsaturated monomers are selected from the group consisting of
(c1) ethylenically unsaturated carboxylic acids and carboxylic anhydrides, in particular acrylic acid, methacrylic acid, itaconic acid, crotonic acid, glutaconic acid, maleic acid, maleic anhydride, fumaric acid and the water-soluble alkali metal salts thereof, alkaline earth metal salts therof, and ammonium salts thereof;
(c2) ethylenically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxypropylsulfonic acid and 2-acrylamido-2-methylpropanesulfonic acid, and the water-soluble alkali metal salts thereof, alkaline earth metal salts thereof, and ammonium salts thereof;
(c3) ethylenically unsaturated phosphonic acids, in particular, for example, vinyl- and allyl-phosphonic acid, and the water-soluble alkali metal salts thereof, alkaline earth metal salts thereof, and ammonium salts thereof; and
(c4) sulfomethylated and/or phosphonomethylated acrylamides and the water-soluble alkali metal salts thereof, alkaline earth metal salts thereof, and ammonium salts thereof.

Preferred anionic ethylenically unsaturated monomers are ethylenically unsaturated carboxylic acids and carboxylic acid anhydrides, in particular acrylic acid, methacrylic acid, itaconic acid, crotonic acid, glutaconic acid, maleic acid, maleic anhydride, fumaric acid, and the water-soluble alkali metal salts thereof, alkaline earth metal salts thereof, and ammonium salts thereof; the water-soluble alkali metal salts of acrylic acid, in particular its sodium and potassium salts and its ammonium salts, being particularly preferred.

In a preferred embodiment the ionic polymer is a homopolymer or a copolymer.

For the purpose of the specification, the term "homopolymer" shall refer to a polymer obtained by polymerization of substantially a single type of monomer, whereas the term "copolymer" shall refer to a polymer obtained by polymerization of two, three, four or more different types of monomers (co-monomers).

When the ionic polymer is a homopolymer, it is derived from a cationic ethylenically unsaturated monomer or an anionic ethylenically unsaturated monomer. When the ionic polymer is a copolymer, it can comprise anionic, non-ionic and cationic ethylenically unsaturated monomers. In this case, the concentration thereof is to be chosen such that the total charge of the ionic polymer is either negative or positive. Water-insoluble monomers may only be present to the extent that the water solubility or the water swellability of the resulting polymer is not impaired.

When the ionic polymer is a copolymer, it is preferably derived from at least one cationic ethylenically unsaturated monomer and at least one non-ionic ethylenically unsaturated co-monomer, or from at least one anionic ethylenically unsaturated monomer and at least one non-ionic ethylenically unsaturated co-monomer.

In a preferred embodiment, the ionic polymer is a cationic polymer, i.e. the total charge of the ionic polymer is positive.

The cationic polymer is preferably derived from a monomer composition comprising
- cationic monomers in an amount within the range of from 1 to 100 wt.-%, preferably of from 1 to 99 wt.-% and more preferably from 5 to 95 wt.-% , most preferably from 20 to 95 wt.-%, and in particular from 40 to 80 wt.-%;
- non-ionic monomers in an amount within the range of from 0 to 99 wt.-%, preferably of from 1 to 99 wt.-%, more preferably of from 5 to 95 wt.-%, most preferably from 5 to 80 wt.-%, and in particular from 20 to 60 wt.-%; and
- anionic monomers in an amount within the range of from 0 to 30 wt.-%, preferably within the range of from 0 to 20 wt.-%, more preferably within the range of from 0 to 10 wt.-%, and most preferably within the range of from 0 to 5 wt.-%, an in particular 0 wt.%,
in each case based on the total weight of monomers contained in the monomer composition.

Preferably, the cationic polymer is derived from a monomer composition comprising cationic monomers in an amount within the range of from 1 to 99 wt.-%, preferably from 5 to 90 wt.-%, more preferably from 20 to 90 wt.-%, and in particular from 20 to 80 wt.-%, in each case based on the total weight of monomers contained in the monomer composition.

Very preferably, the cationic polymer is derived from a mixture of non-ionic monomers, preferably acrylamide and cationic monomers of general formula (III), preferably quaternised dialkylaminoalkyl (meth)acrylates and/or dialkylaminoalkyl(meth)acrylamides. Particularly preferred is dimethylamminomethyl (meth)acrylate quaternised with methyl chloride.

In such monomer compositions, the amount of cationic monomers is preferably at least 20 wt.-%, in particular within the range of from 20 to 80 wt.-%.

In another preferred embodiment, the ionic polymer is an anionic polymer, i.e. the total charge of the ionic polymer is negative.

The anionic polymer is preferably derived from a monomer composition comprising
- anionic monomers in an amount within the range of from 1 to 100 wt.-%, preferably of from 5 to 70 wt.-% and more preferably from 5 to 40 wt.-% , and
- non-ionic monomers in an amount within the range of from 0 to 99 wt.-%, preferably of from 30 to 95 wt.-%, and more preferably from 60 to 95 wt.-%, and optionally
- cationic monomers in an amount within the range of from 0 to 30 wt.-%, preferably within the range of from 0 to 20 wt.-%, more preferably within the range of from 0 to 10 wt.-%, and most preferably within the range of from 0 to 5 wt.-%, and in particular 0 wt.%,
in each case based on the total weight of monomers contained in the monomer composition.

Very preferably, the anionic polymer is derived from a mixture of non-ionic monomers, preferably acrylamide and anionic monomers, in particular ethylenically unsaturated carboxylic acids and carboxylic acid anhydrides, preferably acrylic acid, methacrylic acid, itaconic acid, crotonic acid, glutaconic acid, maleic acid, maleic anhydride, fumaric acid and the water-soluble alkali metal salts thereof, alkaline earth metal salts thereof, and ammonium salts thereof, acrylic acid being particularly preferred as the anionic monomer.

A mixture of acrylic acid with alkyl (meth)acrylates and/or alkyl (meth)acrylamides is also preferred.

In such monomer compositions, the amount of anionic monomers is preferably at least 5 wt.-%.

Preferably, the ionic polymer is of high molecular weight, but is nevertheless a water-soluble or water-swellable polymer. Preferably, the ionic polymer has an average molecular weight M_{w}, measured by the GPC method, of at least 1.0 x 10⁶g/mol, preferably of at least 1.5 x 10⁶ g/mol. In a preferred embodiment, the ionic polymer has an average molecular weight M_{w}, measured by the GPC method, of at least 3 x 10⁶g/mol.

When the water-soluble ionic polymer contains acidic groups, the acidic groups are preferably at least partly neutralized. Preferably, the degree neutralization of the acidic groups is at least 50%, more preferably at least 60%, still more preferably at least 70%, yet more preferably at least 80%, most preferably at least 90%, and in particular at least 95%, relative to the total number of acidic groups contained in the ionic polymer.

In a preferred embodiment, the composition according to the invention further comprises an ionic polymeric dispersant.

Preferably, the ionic polymeric dispersant can also serve as coagulant and/or flocculating auxiliary.

Preferably, the ionic polymeric dispersant is water-soluble or water-swellable.

Preferably, the content of the ionic polymeric dispersant is at most 35 wt.-%, more preferably at most 25 wt.-%, and most preferably at most 20 wt.-%, based on the total weight of the composition.

In a preferred embodiment, the content of the ionic polymeric dispersant is within the range of from 0.005 to 35 wt.-%, more preferably 0.01 to 25 wt.-%, still more preferably 0.1 to 20 wt.-%, yet more preferably 0.1 to 15 wt.-%, most preferably 0.15 to 12 wt.-% and in particular 0.2 to 10 wt.-%, based on the total weight of the composition.

Preferably, the combined content of the ionic polymer and the ionic polymeric dispersant is within the range of from 40 to 99.995 wt.-%, more preferably 50 to 99.995 wt.-%, still more preferably 75 to 99.995 wt.-%, yet more preferably 90 to 99.99 wt.-%, most preferably 95 to 99.95 wt.-% and in particular 98.0 to 99.9 wt.-%, based on the total weight of the composition.

Preferably, the ionic polymeric dispersant exhibits a degree of polymerization of at least 90%, more preferably at least 95%, still more preferably at least 99%, yet more preferably at least 99.9%, most preferably at least 99.95% and in particular at least 99.99%.

Preferably, the weight average molecular weight of the ionic polymeric dispersant is lower than that of the ionic polymer.

In a preferred embodiment, the ionic polymeric dispersant has a weight average molecular weight M_{w} of at most 2.0×10⁶ g/mol. Preferably, the weight average molecular weight M_{w} of the ionic polymeric dispersant is within the range of from 50,000 to 1,500,000 g mol⁻¹, more preferably 75,000 to 1,250,000 g mol⁻¹, still more preferably 100,000 to 1,000,000 g mol⁻¹, yet more preferably 120,000 to 750,000 g mol⁻¹, most preferably 140,000 to 400,000 g mol⁻¹ and in particular 150,000 to 200,000 g mol⁻¹. In a preferred embodiment, the weight average molecular weight M_{w} of the ionic polymeric dispersant is within the range of from 75,000 to 350,000 g mol⁻¹.

Preferably, the molecular weight dispersity M_{w}/Mₙ of the ionic polymeric dispersant is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

Preferably, the ionic polymeric dispersant has a product viscosity within the range of from 100 to 850 mPas, more preferably 150 to 800 mPas, still more preferably 200 to 750 mPas, yet more preferably 250 to 700 mPas, most preferably 300 to 650 mPas and in particular 350 to 600 mPas.

In a preferred embodiment the ionic polymeric dispersant is a homopolymer or a copolymer. When the ionic polymeric dispersant is a homopolymer, it is derived from a cationic ethylenically unsaturated monomer or an anionic ethylenically unsaturated monomer. When the ionic polymeric dispersant is a copolymer, it can comprise anionic, non-ionic and cationic ethylenically unsaturated monomers. In this case, the concentration thereof is to be chosen such that the total charge of the ionic polymeric dispersant is either negative or positive. Water-insoluble monomers may only be present to the extent that the water solubility or the water swellability of the ionic polymeric dispersant is not impaired.

When the ionic polymeric dispersant is a copolymer, it is preferably derived from at least one cationic ethylenically unsaturated monomer and at least one non-ionic ethylenically unsaturated co-monomer, or from at least one anionic ethylenically unsaturated monomer and at least one non-ionic ethylenically unsaturated co-monomer.

In a preferred embodiment, the ionic polymeric dispersant is a cationic polymeric dispersant, i.e. the total charge of the ionic polymeric dispersant is positive.

Preferably, the cationic polymeric dispersant is derived from one or more cationic monomers, more preferably from a single cationic monomer.

In a preferred embodiment, the cationic polymeric dispersant is derived from one or more radically polymerizable, ethylenically unsaturated cationic monomers. Preferably, the cationic monomers are selected from the group consisting of (alk)acrylamidoalkyltrialkyl ammonium halides, (alk)acryloyloxyalkyl trialkyl ammonium halides, alkenyl trialkyl ammonium halides and dialkenyl dialkyl ammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

Preferably, the cationic polymeric dispersant is derived from
- 30 to 100 wt.-%, more preferably 50 to 100 wt.-%, and most preferably 75 to 100 wt.-% of (alk)acrylamidoalkyltrialkyl ammonium halides, (alk)acryloyloxyalkyl trialkyl ammonium halides, alkenyl trialkyl ammonium halides, and/or dialkenyl dialkyl ammonium halides, and
- 0 to 70 wt.-%, more preferably 0 to 50 wt.-%, and most preferably 0 to 25 wt.-% of non-ionic co-monomers.

In a preferred embodiment, the cationic polymeric dispersant is derived from a dialkenyl dialkyl ammonium halide, preferably a diallyl dimethyl ammonium halide (DADMAC).

In another preferred embodiment, the cationic polymeric dispersant is a copolymerizate of epichlorohydrin and dialkylamine, preferably dimethylamine, i.e. poly-[N,N-dimethyl-2-hydroxy-propylen-(1,3)-ammonium chloride].

In still another preferred embodiment, the cationic polymeric dispersant is derived from a cationic monomer according to general formula (III) as defined supra.

The cationic monomer according to general formula (III) may be an ester (Z₁ = O), such as dimethylaminoethyl (meth)acrylate quaternized with methylchloride (ADAME quat.). Preferably, however, the monomer according to general formula (III) is an amide (Z₁ = NH), particularly dimethylaminopropyl acrylamide quaternized with methylchloride (DIMAPA quat).

Preferably, quaternized dialkylaminoalkyl (meth)acrylates or dialkylaminoalkyl(meth)acrylamides with 1 to 3 C atoms in the alkyl or alkylene groups are employed as monomers according to general formula (II), more preferably the methyl chloride-quaternized ammonium salt of dimethylamino methyl(meth)acrylate, dimethylamino ethyl(meth)acrylate, dimethylamino propyl(meth)acrylate, diethylamino methyl(meth)acrylate, diethylamino ethyl(meth)-acrylate, diethylamino propyl(meth)acrylate, dimethylamino methyl(meth)acrylamide, dimethylamino ethyl(meth)acrylamide, dimethylamino propyl(meth)acrylamide, diethylamino methyl(meth)acrylamide, diethylamino ethyl(meth)acrylamide, diethylamino propyl(meth)-acrylamide.

Especially preferred monomers are dimethylaminoethyl acrylate and dimethylaminopropyl-acrylamide. Quaternization may be effected using dimethyl sulfate, diethyl sulfate, methyl chloride or ethyl chloride. Monomers quaternized with methyl chloride are particularly preferred.

When the cationic polymeric dispersant is a copolymer, it is preferably derived from at least one cationic monomer in combination with at least one non-ionic monomer.

Suitable non-ionic monomers include non-ionic monomers according to general formula (I) and amphiphilic, non-ionic monomers according to general formula (II).

Examples of non-ionic monomers of general formula (I) include (meth)acrylamide, N-methyl (meth)acrylamide, N-isopropyl(meth)acrylamide or N,N-substituted (meth)acryl amides such as N,N-dimethyl(meth)acrylamide, N,N-diethyl(meth)acrylamide, N-methyl-N-ethyl(meth)-acrylamide or N-hydroxyethyl(meth)acrylamide.

Examples of amphiphilic, non-ionic monomers of general formula (II) include reaction products of (meth)acrylic acid and polyethylene glycols (10 to 50 ethylene oxide units), which are etherified with a fatty alcohol, or the corresponding reaction products with (meth)acrylamide.

In another preferred embodiment, the ionic polymeric dispersant is an anionic polymeric dispersant, i.e. the total charge of the ionic polymeric dispersant is negative.

Preferably, the anionic polymeric dispersant is derived from one or more anionic monomers, more preferably from a single anionic monomer.

Preferably, the anionic polymeric dispersant is derived from one or more radically polymerizable, ethylenically unsaturated monomers.

Preferably, the anionic polymeric dispersant contains at least one of the functional groups selected from ether groups, carboxyl groups, sulfone groups, sulfate ester groups, amino groups, amido groups, imido groups, tert-amino groups, and/or quaternary ammonium groups.

As examples thereof mention may be made of cellulose derivatives, polyvinyl acetates, starch, starch derivatives, dextrans, polyvinylpyrrolidones, polyvinylpyridines, polyethylenimines, polyamines, polyvinylimidazoles, polyvinylsuccinimides, polyvinyl-2-methylsuccinimides, polyvinyl-1,3-oxazolid-2-ones, polyvinyl-2-methylimidazolines and/or their respective copolymers with maleic acid, maleic anhydride, fumaric acid, itaconic acid, itaconic anhydride, (meth)acrylic acid, salts and/or esters of (meth)acrylic acid and/or (meth)acrylamide compounds.

Preferably, the anionic polymeric dispersant is derived from at least 30 wt.-%, preferably at least 50 wt.-%, more preferably 100 wt.-%, of anionic monomer units which are derived from anionic monomers, such as, for example,
▪ ethylenically unsaturated carboxylic acids and carboxylic acid anhydrides, in particular acrylic acid, methacrylic acid, itaconic acid, crotonic acid, glutaconic acid, maleic acid and maleic anhydride, fumaric acid and the water-soluble alkali metal salts thereof, alkaline earth metal salts thereof, and ammonium salts thereof;
▪ ethylenically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxy-propylsulfonic acid and 2-acrylamido-2-methylpropanesulfonic acid, and the water-soluble alkali metal salts thereof, alkaline earth metal salts thereof, and ammonium salts thereof;
▪ ethylenically unsaturated phosphonic acids, in particular, for example, vinyl- and allyl-phosphonic acid and the water-soluble alkali metal salts thereof, alkaline earth metal salts thereof, and ammonium salts thereof;
▪ sulfomethylated and/or phosphonomethylated acrylamides and the water-soluble alkali metal salts thereof, alkaline earth metal salts thereof, and ammonium salts thereof.

Preferred anionic monomers are water-soluble alkali metal salts of acrylic acid, polypotassium acrylate being particularly preferred according to the invention.

Preferred embodiments A to D of the composition according to the invention are summarized in the table here below:

| component | A | B | C | D |
|---|---|---|---|---|
| substantially un-branched and un-crosslinked cationic polymer derived from at least a) + b): | | | | |
| a) non-ionic ethylenically unsaturated monomer | monomer according to formula (I) or (II) | monomer according to formula (I) | (alk)acrylamide | acrylamide |
| b) cationic ethylenically unsaturated monomer | monomer according to formula (III) | monomer according to formula (III) where Z₂ means O | (alk)acryloyloxyalkyl trialkyl ammonium halide | ADAME quat. |
| non-ionic surfactant | non-ionic surfactant R¹-O-A-O-R² | comprises monomer units derived from ethylene glycol or ethylene glycol and propylene glycol. | surfactant according to type (i), (ii), (iii), (iv) or (v) | according to general formula (A), and HLB ≤ 14 |
| ionic polymeric dispersant derived from | monomer according to formula (II) | monomer according to formula (II) where Z₂ means NH | (alk)acrylamidoalkyl trialkyl ammonium halide | DIMAPA quat. |

Preferred variants 1 to 6 of the embodiments A to D are summarized in the table here below:

| component | 1 | 2 | 3 | 4 | 5 | 6 |
|---|---|---|---|---|---|---|
| water | ≤ 65 wt.-% | ≤ 12 wt.-% | ≤ 12 wt.-% | ≤ 12 wt.-% | ≤ 10 wt.-% | ≤ 10 wt.-% |
| non-ionic surfactant | 0.005-10 wt.-% | 0.01-7.5 wt.-% | 0.01-5 wt.-% | 0.02-3.0 wt.-% | 0.05-2.0 wt.-% | 0.1-1.0 wt.-% |
| ionic polymeric dispersant(s) | ≤ 35 wt.% | ≤ 25 wt.% | ≤ 20 wt.-% | 0.1 to 15 wt.-% | 0.15 to 12 wt.-% | 0.2 to 10 wt.-% |
| cationic polymer derived from a) + b) + c) | 40 to 99.995 wt.-% | 50 to 99.99 wt.-% | 75 to 99.9 wt.-% | 75 to 99.9 wt.-% | 80 to 99.8 wt.-% | 85 to 99.7 wt.-% |
| a) non-ionic ethylenically unsaturated monomer(s) | 0 to 99 wt.-% | 1 to 99 wt.-% | 5 to 95 wt.-% | 5 to 95 wt.-% | 5 to 80 wt.-% | 5 to 80 wt.-% |
| b) cationic ethylenically unsaturated monomer(s) | 1 to 100 wt.-% | 1 to 99 wt.-% | 5 to 95 wt.-% | 5 to 95 wt.-% | 20 to 95 wt.-% | 20 to 95 wt.-% |
| c) anionic ethylenically unsaturated monomer(s) | 0 to 30 wt.-% | 0 to 20 wt.-% | 0 to 20 wt.-% | 0 to 10 wt.-% | 0 to 5 wt.-% | 0 wt.-% |

Preferred embodiments E to H of the composition according to the invention are summarized in the table here below:

| component | E | F | G | H |
|---|---|---|---|---|
| substantially un-branched and un-crosslinked anionic polymer derived from at least a) + c): | | | | |
| a) non-ionic ethylenically unsaturated monomer | monomer according to formula (I) or (II) | monomer according to formula (I) | (alk)acrylamide | acrylamide |
| c) anionic monomer | ethylenically unsaturated carboxylic, sulfonic or phosphonic acid derivative, sulfomethylated or phosphonomethylated acrylamide, or a water-soluble salt thereof | ethylenically unsaturated carboxylic acid, carboxylic anhydride or a water-soluble salt thereof | water-soluble salt of acrylic acid | sodium, potassium or ammonium acrylate |
| non-ionic surfactant | non-ionic surfactant R¹-O-A-O-R² | comprises monomer units derived from ethylene glycol or ethylene glycol and propylene glycol. | surfactant according to type (i), (ii), (iii), (iv) or (v) | according to general formula (A), and HLB ≤ 14 |
| ionic polymeric dispersant derived from | ethylenically unsaturated carboxylic, sulfonic or phosphonic acid derivative, sulfomethylated or phosphonomethylated acrylamide, or a water-soluble salt thereof | ethylenically unsaturated carboxylic acid, carboxylic anhydride or a water-soluble salt thereof | water-soluble salt of acrylic acid | sodium, potassium or ammonium acrylate |

Preferred variants 7 to 12 of the embodiments E to H are summarized in the table here below:

| component | 7 | 8 | 9 | 10 | 11 | 12 |
|---|---|---|---|---|---|---|
| water | ≤ 65 wt.-% | ≤ 12 wt.-% | ≤ 12 wt.-% | ≤ 12 wt.-% | ≤ 10 wt.-% | ≤ 10 wt.-% |
| non-ionic surfactant | 0.005-10 wt.-% | 0.01-7.5 wt.-% | 0.01-5 wt.-% | 0.02-3.0 wt.-% | 0.05-2.0 wt.-% | 0.1-1.0 wt.-% |
| ionic polymeric dispersant(s) | ≤ 35 wt.% | ≤ 25 wt.% | ≤ 20 wt.-% | 0.1 to 15 wt.-% | 0.15 to 12 wt.-% | 0.2 to 10 wt.-% |
| anionic polymer derived from | 40 to | 50 to 99.99 | 75 to 99.9 | 75 to 99.9 | 80 to 99.8 | 85 to 99.7 |
| a) + b) + c) | 99.995 wt.-% | wt.-% | wt.-% | wt.-% | wt.-% | wt.-% |
| a) non-ionic ethylenically unsaturated monomer(s) | 0 to 99 mole.-% | 30 to 95 mole.-% | 30 to 95 mole.-% | 60 to 95 mole.-% | 60 to 95 mole.-% | 60 to 95 mole.-% |
| b) cationic ethylenically unsaturated monomer(s) | 0 to 30 wt.-% | 0 to 20 wt.-% | 0 to 20 wt.-% | 0 to 10 wt.-% | 0 to 5 wt.-% | 0 wt.-% |
| c) anionic ethylenically unsaturated monomer(s) | 1 to 100 wt.-% | 5 to 70 wt.-% | 5 to 70 wt.-% | 5 to 40 wt.-% | 5 to 40 wt.-% | 5 to 40 wt.-% |

In the above tables, in case of the water, non-ionic surfactant, ionic polymeric dispersant and cationic or anionic polymer all percentages by weight (wt.-%) are based on the total weight of the composition. In case of the monomers all percentages by weight (wt.-%) are based on the total molar amount of monomers forming the cationic or anionic polymer.

Preferred components of the water-in-water polymer dispersion and their respective content result from the following combinations of embodiments A to D with variants 1 to 6: A¹, A², A³, A⁴, A⁵, A⁶, B¹, B², B³, B⁴, B⁵, B⁶, C¹, C², C³, C⁴, C⁵, C⁶, D¹, D², D³, D⁴, D⁵, D⁶, E⁷, E⁸, E⁹, E¹⁰, E¹¹, E¹², F⁷, F⁸, F⁹, F¹⁰, F¹¹, F¹², G⁷, G⁸, G⁹, G⁷, G ⁸, G⁹, H⁷, H⁸, H⁹, H¹⁰, H¹¹ and H¹². For example, "C⁴" means a combination of embodiment C with variant 4, i.e., a composition containing ≤ wt.-% water; 0.02-3.0 wt.-% of at least one non-ionic surfactant R¹-O-A-O-R² according to type (i), (ii), (iii), (iv) or (v); 0.1 to 15 wt.-% of at least one cationic polymer dispersant derived from (alk)acrylamidoalkyl trialkyl ammonium halide; 75 to 99.9 wt.-% of at least one cationic copolymer derived from a) 5-95 wt.-% of at least one (alk)acrylamide, b) 5-95 wt.-% of at least one (alk)acryloyloxyalkyl trialkyl ammonium halide and c) at most 10 wt.-% of an anionic monomer.

Preferably, the composition according to the invention is solid. In comparison to liquids, solid compositions exhibit higher storage stability and allow an easier transportation.

Preferably the composition according to the invention is obtainable by a process comprising the method of adiabatic gel polymerization, wherein the ionic polymer is formed by radical polymerization of its monomer constituents in aqueous solution, optionally in presence of the non-ionic surfactant R¹-O-A-O-R² and optionally in presence of the ionic polymeric dispersant.

Preferably, the process comprises the step of
(i) subjecting an aqueous reaction mixture comprising
   a) one or more non-ionic ethylenically unsaturated monomers, and/or
   b) one or more cationic ethylenically unsaturated monomers, and/or
   c) one or more anionic ethylenically unsaturated monomers,
   d) optionally the ionic polymeric dispersant, and
   e) optionally the non-ionic surfactant R¹-O-A-O-R², to a radical polymerization by adiabatic gel polymerization, wherein the ionic polymeric dispersant, the non-ionic surfactant R¹-O-A-O-R² and the non-ionic, anionic and cationic ethylenically unsaturated monomers are defined as described above.

Preferably, the content of the ionic polymeric dispersant, if present, is within the range of from 0.1 to 40 wt.-%, more preferably 0.5 to 35 wt.-%, still more preferably 1.0 to 30 wt.-%, yet more preferably 5.0 to 25 wt.-%, most preferably 10 to 20 wt.-% and in particular 12 to 16 wt.-%, based on the total weight of the aqueous reaction mixture.

In a preferred embodiment, the reaction mixture of step (i) comprises the non-ionic surfactant R¹-O-A-O-R². In another preferred embodiment, the non-ionic surfactant R¹-O-A-O-R² is added at a later stage of the process.

The aqueous reaction mixture comprises water, preferably deionized water. The water content may vary from 0.01 to 99.99 wt.-%. In a preferred embodiment, the water content is within the range of from 10 to 90 wt.-%, more preferably 15 to 85 wt.-%, still more preferably 20 to 80 wt.-%, yet more preferably 25 to 75 wt.-%, most preferably 30 to 70 wt.-% and in particular 35 to 65 wt.-%, based on the total weight of the aqueous reaction mixture. In another preferred embodiment, the water content is within the range of from 35 to 90 wt.-%, more preferably 40 to 85 wt.-%, still more preferably 45 to 80 wt.-%, yet more preferably 50 to 75 wt.-%, most preferably 55 to 70 wt.-% and in particular 60 to 66 wt.-%, based on the total weight of the aqueous reaction mixture.

The aqueous reaction mixture does not contain branching agents and cross-linkers (particularly monomers having more than one radically polymerizable ethylenically unsaturated moiety) such that the resulting cationic copolymer is substantially free of branching. The aqueous reaction mixture does not contain any monomers having more than one radically polymerizable ethylenically unsaturated moiety. Therefore, the ionic copolymer that is polymerized from the monomer composition, optionally in the presence of the ionic polymeric dispersant, is substantially un-branched and substantially un-crosslinked.

If the water-soluble ionic polymer is derived from a monomer composition comprising minor amounts of cross-linking monomers, a preferred cross-linking monomer is allylacrylamide. According to the invention, the complete absence of cross-linking monomers is principally desirable, as cross-linking of the polymers tends to deteriorate the overall performance of the composition according to the invention. However, mainly due to side reactions in the course of monomer synthesis, in the production of technical grade monomer products the formation of minor amounts of cross-linking monomers cannot always be completely suppressed.

However, this does not mean that branching reactions that might take place e.g. due to radical termination reactions are completely excluded from the invention. Rather, as such branching reactions always take place to a certain extent, they are generally tolerable. For example, when the propagating radical chain abstracts a proton from a polymer backbone, polymerization of this chain is terminated but a new radical is generated which in turn might originate a new propagating radical, thereby leading to a branching point. However, branching and cross-linking to an extent that can be observed in the course of (thermal) azeotropic dewatering of anionic polymers in the presence of polyethylene glycol should avoided.

The degree of branching and cross-linking, respectively, can be routinely determined by measuring the gel content of a standardized aqueous solution of the water-soluble ionic polymer. For the purpose of the specification, the gel content is preferably determined according to the following procedure: 0,8 g of the sample is weighed to an accuracy of 0.01 g into a 1000 ml beaker. 800 ml of tap water (19-25 °C) is added in such a way that no lumps are formed. Then, the solution is stirred for 30, 60, or 90 minutes, depending on the formula instruction, with a finger stirrer at 300 r.p.m. (dimensions of the finger stirrer: material: stainless steel, diameter: 8 mm, offset: 15 mm (measured from center to center), length of the lower part of the shank: 65 mm, length of the section that provides the offset when measured in parallel to said lower part of the shank: 25 mm, overall length: 240 mm. When stirring is finished, the solution is placed on a standard sieve (315 4m DIN-ISO 3310/1-200x50mm) and once it has passed through the sieve, this is rinsed through five times with one liter of fresh water from the beaker. After the rinsing water has passed through the sieve any residual water under the sieve is wiped off with the rubber policeman. Using the rubber policeman and the powder funnel the residue is transferred to a 100 ml measuring cylinder and the volume determined according to the following formula: ml/L (undissolved gel component) = Volume (residue) x 1,25.

Preferably, the water-soluble ionic polymer that is optionally admixed with an ionic polymeric dispersion has a gel content (undissolved gel component) of at most 50 ml/L, more preferably at most 45 ml/L, still more preferably at most 40 ml/L, yet more preferably at most 35 ml/L, even more preferably at most 30 ml/L, most preferably at most 25 ml/L, and in particular at most 20 ml/L, according to the above procedure.

Usually, before the free radical polymerization is initiated, the aqueous reaction mixture is prepared from its components. The preparation of aqueous reaction mixtures is known to the skilled person. The components may be added simultaneously or consecutively.

The components may be added by conventional means, e.g. by pouring or dropping liquids, by dosing powders, and the like.

Preferably, an aqueous dispersion is prepared comprising the ionic ethylenically unsaturated monomer, the non-ionic ethylenically unsaturated monomer and optionally the ionic polymeric dispersant, preferably in homogeneous aqueous solution. Further components may be added to the aqueous dispersion, such as chelating agents, buffers (acids and/or bases), chain transfer agents, and the like.

Suitable chain transfer agents are known to the skilled person. Preferably, however, no chain transfer agents are added.

In a preferred embodiment, the pH of the aqueous dispersion is adjusted to a value within the range of from 1 .0 to 5.0, more preferably 1 .5 to 4.5, still more preferably 2.0 to 4.0, and most preferably 2.5 to 3.5. In another preferred embodiment, the pH is adjusted to a value within the range of from 2.0 to 6.0, more preferably 2.5 to 5.5, and most preferably 3.0 to 5.0. The pH value may be adjusted by means of suitable acids and bases, respectively. Preferred acids are organic acids and mineral acids, such as formic acid, acetic acid, hydrochloric acid and sulfuric acid.

Preferably, the aqueous dispersion is vigorously stirred by means of, e.g., a conventional spiral-stirrer, high-speed mixer, homogenizer, and the like.

In principle, it is not necessary that the entire amount of each component is initially present when the aqueous reaction mixture is prepared. Alternatively, partial dispersion of the monomers can be effected at the beginning of the polymerization, the remainder of the monomers being added as metered portions or as a continuous feed distributed over the entire course of polymerization. For example, only a certain portion of a particular component, e.g., only 70 wt.-% of the non-ionic ethylenically unsaturated monomer may be initially employed, and thereafter, possibly in the course of the polymerization reaction, the remainder of said particular component, e.g., the residual 30 wt.-% of the non-ionic ethylenically unsaturated monomer, is employed.

In a preferred embodiment of the method according to the invention, before the aqueous reaction mixture is subjected to a radical polymerization, a water-soluble salt is added in quantities of 0.1 to 5.0 wt.-%, based on the total weight of the aqueous reaction mixture.

Ammonium, alkali metal and/or alkaline earth metal salts, preferably ammonium, sodium, potassium, calcium and/or magnesium salts, can be used as water-soluble salts. Such salts can be salts of an inorganic acid or of an organic acid, preferably of an organic carboxylic acid, sulfonic acid, phosphonic acid, or of a mineral acid. The water-soluble salts are preferably salts of an aliphatic or aromatic mono-, di-, polycarboxylic acid, of a hydroxycarboxylic acid, preferably of acetic acid, propionic acid, citric acid, oxalic acid, succinic acid, malonic acid, adipic acid, fumaric acid, maleic acid or benzoic acid, or sulfuric acid, hydrochloric acid or phosphoric acid. Very particularly preferably, sodium chloride, ammonium sulfate and/or sodium sulfate are used as water-soluble salts.

The salts can be added before, during or after polymerization, polymerization preferably being carried out in the presence of a water-soluble salt.

After the aqueous reaction mixture has been prepared, it is subjected to a radical polymerization by adiabatic gel polymerization reaction, i.e., polymerization of the monomer composition containing the non-ionic ethylenically unsaturated monomers and/or the cationic ethylenically unsaturated monomers, and/or the non-ionic ethylenically unsaturated monomers, optionally in the presence of the ionic polymeric dispersant and optionally in presence of the non-ionic surfactant R¹-O-A-O-R² is initiated, thereby yielding a solid gel comprising the ionic polymer, the ionic polymeric dispersant, if present during the polymerization process, and the non-ionic surfactant R¹-O-A-O-R², if present during the polymerization process.

The skilled person knows how to radically polymerize monomers in an aqueous reaction mixture.

Preferably, the start temperature for the polymerization is adjusted to a range of from -10 to 25 °C, more preferably a range of from 0 °C to 15 °C. Higher start temperatures lead to polymer gels which are too soft to be further processed in subsequent size-reduction and drying processes.

Preferably, oxygen is purged from the aqueous reaction mixture by an inert gas, such as nitrogen. The polymerization is preferably carried out under an inert gas atmosphere, e.g. under a nitrogen atmosphere.

Typically, the exothermic polymerization reaction of the monomers is started by addition of a polymerization initiator.

Radicals may be formed, e.g., upon thermally induced or photochemically induced homolysis of single bonds or redox reactions.

Examples of suitable water-soluble initiators include, e.g., 2,2'-azobis-(2-amidinopropane) dihydrochloride, 4,4'-azobis-(4-cyanopentanoic acid), 2,2'-azobis(2-(-imidazolin-2-yl)propane dihydrochloride or redox systems such as ammonium persulfate/ferric sulfate. Oil-soluble initiators include, e.g., dibenzoyl peroxide, dilauryl peroxide or tert-butyl peroxide, or azo compounds such as 2,2'-azobisisobutyronitrile, dimethyl 2,2'-azobisisobutyrate and 2,2'-azobis-(4-methoxy-2, 4-dimethylvaleronitrile). The initiators may be used either individually or in combinations and generally in an amount of about 0.015 to 0.5wt.-% of the total weight of the aqueous reaction mixture. The skilled person principally knows how to modify the amount and type of the initiator in order to modify the properties of the resultant polymer product, e.g., its average molecular weight.

Preferably, azo compounds such as 2,2'-azobisisobutyronitrile, 2,2'-azobis(2-(-imidazolin-2-yl)propane dihydrochloride, 2,2'-azobis(2-aminopropane) dihydrochloride or preferably potassium persulfate, ammonium persulfate, hydrogen peroxide, optionally in combination with a reducing agent, e.g. an amine or sodium sulfite, are used as radical initiators. The amount of initiator, relative to the monomers to be polymerized, generally ranges from 10⁻³ to 1.0 wt.-%, preferably from 10⁻² to 0.1 wt.-%. The initiators can be added completely or also only in part at the beginning of the polymerization, with subsequent apportioning of the residual amount over the entire course of polymerization. In a preferred embodiment, the polymerization is initiated by means of a sodiumperoxodisulfate and, after reaching the maximum temperature, continued with an azo initiator, such as 2,2'-azobis(2-(-imidazolin-2-yl)propane dihydrochloride. At the end of the polymerization, a redox initiator system is preferably added in order to reduce the content of residual monomers.

In a preferred embodiment, once the exothermic polymerization reaction is complete, i.e. generally after the temperature maximum, the content of residual monomers is further reduced by subsequent addition of redox initiator.

In another preferred embodiment, the monomer composition and optionally the ionic polymeric dispersant is apportioned into the polymerization reactor during polymerization. In general, a portion, e.g. 10 to 20% of the monomers and optionally the ionic polymeric dispersant, is initially introduced. Following initiation of polymerization, the above-mentioned apportioning is effected, optionally accompanied by further apportioning of polymerization initiator.

In addition, it is also possible to remove water during polymerization and optionally to add further cationic polymeric dispersant.

The polymerization may be carried out in aqueous solution, in batches in a polymerization vessel or continuously on an endless belt, as is described, for example, in DE 3544770.

Preferably, the polymerization reaction is carried out at atmospheric pressure without a supply of external heat. Through the exothermal reaction, heating of the polymerization mixture takes place with formation of a polymer gel.

Preferably, the reaction mixture reaches a maximal end temperature within the range of from 50 to 150 °C, depending on the content of polymerisable material and on the decomposition kinetics of the initiator used.

Polymerization times are the same as those conventionally used in the art, generally 1.5 to 18 hours and preferably 2 to 6 hours, although as little as one-half hour could be used. However, attempting more rapid polymerization over a shorter period of time creates problems with removing heat. In this regard it is greatly preferred that the polymerization medium be stirred well or otherwise agitated during the polymerization.

Polymerization conversion or the end of polymerization can easily be detected by determining the content of residual monomers. Methods for this purpose are familiar to those skilled in the art (e.g. HPLC).

After the temperature maximum has been reached, the solid polymer gel being formed can be further processed immediately or else after a holding time. Preferably the polymer gel will be further processed immediately after the maximum temperature has been reached.

Following polymerization, it also can be advantageous to cool down the aqueous reaction mixture before optionally adding further additives, such as salts or acids, to the dispersion, preferably with stirring.

To reduce the residual monomer content, it is also possible to increase the temperature during the course of the polymerization. Alternatively, it is also possible to use additional initiators during and at the end of the polymerization and/or residual monomer destructors.

Residual monomer destructors within the meaning of the invention are substances that modify polymerizable monomers by means of a chemical reaction in such a way that they are no longer polymerizable, such that within the meaning of the invention they are no longer monomers. Substances that react with the double bond present in the monomers and/or substances that can initiate a more extensive polymerization can be used for this purpose. As residual monomer destructors that react with the double bond, reducing agents can for example be used, preferably substances from the group of acids and neutral salts of acids derived from sulfur having an oxidation number lower than VI, preferably sodium dithionite, sodium thiosulfate, sodium sulfite or sodium disulfite, and/or substances having a hydrogen sulfide group, preferably sodium hydrogen sulfide or compounds from the group of thiols, preferably mercaptoethanol, dodecyl mercaptan, thiopropionic acid or salts of thiopropionic acid or thiopropanesulphonic acid or salts of thiopropanesulphonic acid, and/or substances from the group of amines, preferably from the group of amines with low volatility, preferably diisopropanolamine or aminoethyl ethanolamine, and/or substances from the group comprising Bunte salts, formamidine sulfinic acid, sulfur dioxide, aqueous and organic solutions of sulfur dioxide or thio urea.

Preferably, at the end of the polymerization the remaining aqueous composition has a residual content of cationic ethylenically unsaturated monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, at the end of the polymerization the remaining aqueous composition has a residual content of anionic ethylenically unsaturated monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, at the end of the polymerization the remaining aqueous composition has a residual content of non-ionic ethylenically unsaturated monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, the composition according to the invention contains no substantial amounts of organic solvents and volatile organic constituents (VOC). Preferably, the composition does not contain any organic solvents or volatile organic constituents (VOC), or at most 50 ppm, preferably at most 45 ppm, more preferably at most 40 ppm, still more preferably 35 ppm, yet more preferably at most 30 ppm, even more preferably at most 25 ppm, most preferably at most 20 ppm, and in particular at most 15 ppm. The content of organic solvents and volatile organic constituents (VOC) can be measured by routine procedures.

Preferably, the composition according to the invention contains no substantial amounts of oil. Preferably, the composition does not contain any oil, or at most 50 ppm, preferably at most 45 ppm, more preferably at most 40 ppm, still more preferably 35 ppm, yet more preferably at most 30 ppm, even more preferably at most 25 ppm, most preferably at most 20 ppm, and in particular at most 15 ppm. The content of oil can be measured by routine procedures.

Preferably, the process according to which the composition according to the invention is obtainable further comprises the step of
(ii) crushing or chopping the gel obtained from step (i);
Step (ii) may be carried out in standard industrial apparatus.

If the polymerization is carried out in presence of an ionic polymeric dispersant as defined supra, the weight ratio of the ionic polymeric dispersant to the ionic polymer is decisive for further processing of the polymer gel. If the ratio exceeds the value of 0.01:10 to 1:4, there are formed very soft gels, which immediately coalesce once again after size reduction and make drying on the industrial scale almost impossible.

Ionic polymers with ionic monomer proportions of greater than 60 wt % are particularly critical as regards further processing. In those cases, it has often proved effective to adjust the weight ratio of the ionic polymeric dispersant to the ionic polymer to 0.2:10 to <1:10.

In a preferred embodiment, in step (ii) a separating and/or anti-sticking agent is added to the gel obtained from step (i).

The separating and/or anti-sticking agent can be any surfactant with separating and/or anti-sticking properties. Preferably, the separating and/or anti-sticking agent is selected from the group consisting of fatty acid dialcohol amides, quaternized reaction products of fatty acids and alcohol amines and fatty acid amidoalkyl betaines.

Typically, for the size-reduction of a gel formed by a gel polymerization process the addition of such separating and/or anti-sticking agent is required.

It has been surprisingly found that by the presence of the non-ionic surfactant R¹-O-A-O-R², the amount of separating and/or anti-sticking agent can be reduced or completely omitted.

If a separating and/or anti-sticking agent is used, it is added in such an amount that the flowability of the final composition obtained after step (iv) is not impaired and the foaming behavior of the final composition when used as a flocculant in solid-liquid separation is not negatively affected.

Preferably, the separating and/or anti-sticking agent does not have any defoaming or anti-foaming properties.

In another preferred embodiment, step (ii) is performed without the addition of a separating and/or anti-sticking agent.

After size reduction, the gel is preferably dried at a temperature within the range of from 70°C to 150°C, i.e. the process preferably further comprises the step of
(iii) drying the product obtained from step (ii) at a temperature within the range of from 70 to 150 °C.

More preferably, step (iii) is performed at a temperature within the range of from 80 °C to 120 °C, in particularly within the range of from 90 °C to 110 °C.

Preferably, the drying is performed in batches in a circulating-air drying oven. In the continuous version, drying takes place in the same temperature ranges, for example on a belt dryer or in a fluidized-bed dryer. After drying, the product preferably has a moisture content of less than or equal to 12 wt.-%, and particularly preferably of less than or equal to 10 wt.-%.

After drying, the product is preferably ground to the desired particle-size fraction, i.e. the process preferably further comprises the step of
(iv) grinding the product obtained from step (iii).

Preferably, at least 90 wt % of the ground product should have a size not exceeding 2.0 mm, more preferably a size not exceeding 1.5 mm, in order to achieve rapid dissolution of the product. Preferably, fine fractions smaller than 0.1 mm should amount to less than 10 wt %, preferably less than 5 wt %.

Preferably, the particles after drying have a form factor of at most 50%, more preferably at most 45%, still more preferably at most 40%, yet more preferably at most 35%, even more preferably at most 30%, most preferably at most 35%, and in particular at most 30%. The form factor can be routinely determined according to the following procedure:
Preferably, when the composition according to the invention is provided in particulate form, the polymer particles are characterized by a specific particle shape and spherical particle content. The non-spherical parameter (NSP) is a measure of the degree of deviation from a spherical shape. When determining the non-spherical parameter (NSP) of the particles according to the invention, e.g. by means of a PartAn 2001 L (photo-optical image analyzing system), the non-spherical parameter (NSP) is preferably at least 20%, more preferably at least 30%, still more preferably at least 40%, yet more preferably at least 50%, even more preferably at least 60%, most preferably at least 70%, and in particular at least 75%.

Preferably, the process further comprises the step of
(v) adding the non-ionic surfactant R¹-O-A-O-R².

Step (v) may be performed at any time during the process according which the composition according to the invention can be obtained, i.e. before step (i), after step (iv) or at any time in between.

In a preferred embodiment, step (v) is performed before step (i), i.e. the non-ionic surfactant R¹-O-A-O-R² is added to the aqueous reaction mixture comprising the monomer composition and is present during the polymerization reaction.

In another preferred embodiment, step (v) performed after step (iv), i.e. the non-ionic surfactant R¹-O-A-O-R² is added to the ground product obtained from step (iv).

In still another preferred embodiment, step (v) is performed between steps (i) and (iv), i.e. the non-ionic surfactant R¹-O-A-O-R² is added to the gel obtained from step (i), to the crushed or chopped gel obtained from step (ii) or to the dried product obtained from step (iii).

In yet another preferred embodiment, the amount of non-ionic surfactant divided into at least two portions, which independently of one another may be added at any time of the process. For example, one portion is added before step (i) and the other portion is added to the ground product obtained from step (iv).

A further aspect of the invention relates to a process for manufacturing the composition according to the invention comprising steps (i), optionally (ii), optionally (iii), optionally (iv) and (v) as defined supra. Preferably, the process comprises all of the steps (i)-(v).

The composition according to the invention is useful as additive in solid/liquid separation processes, e.g., as flocculating auxiliary in the sedimentation, flotation or filtration of solids; as thickener; or as a retention agent or drainage aid, e.g., in papermaking/ retention in paper; or in sludge dewatering in sewage plants.

A further aspect of the invention relates to the use of the composition according to the invention as flocculating auxiliary for purifying waste water or conditioning potable water.

A further aspect of the invention relates to a process for treating waste water, drinking water or process water, the process comprising the steps of
(a) optionally, especially when the composition according to the invention is provided in solid form, preparing a water-in-water polymer dispersion by mixing the composition according to the invention with water, and
(b) flocculating an aqueous suspension or slurry, preferably sewage sludge, by introducing the water-in-water polymer dispersion, and
(c) dewatering the aqueous suspension or slurry, preferably by using a decanter, chamber filter press or belt filter press.

Preferably, the composition according to the invention is used in a dosage within the range of from 20 g/m³ to 1000 g/m³, more preferably within the range of from 60 g/m³ to 500 g/m³, still most preferably within the range of from 80 g/m³ to 450 g/m³, most preferably within the range of from 100 g/m³ to 400 g/m³, and in particular within the range of from 120 g/m³ to 350 g/m³, based on the amount of the aqueous suspension or slurry.

A further aspect of the invention relates to the use of the composition according to the invention as additive, preferably as retention agent or drainage aid, in the manufacture of paper, paperboard or cardboard.

A further aspect of the invention relates to a process for the manufacture of paper, paperboard or cardboard, the process comprising the steps of
(a) optionally, especially when the composition according to the invention is provided in solid form, preparing a water-in-water polymer dispersion by mixing the composition according to the invention with water, and
(b) adding the water-in-water polymer dispersion to an aqueous cellulosic suspension.

Preferably, the composition according to the invention is employed in a dosage within the range of from 20 g/m³ to 1000 g/m³, more preferably within the range of from 60 g/m³ to 500 g/m³, still most preferably within the range of from 80 g/m³ to 450 g/m³, most preferably within the range of from 100 g/m³ to 400 g/m³, and in particular within the range of from 120 g/m³ to 350 g/m³, based on the amount of the aqueous cellulosic suspension.

As all preferred embodiments of the composition according to the invention also apply to the uses according to the invention as well as to the processes according to the invention, these preferred embodiments are not mentioned again.

### EXAMPLES

The following examples further illustrate the invention but are not to be construed as limiting its scope.

### EXAMPLE 1

Lab tests were performed by dewatering sludge samples (obtained from central wastewater treatment plant in Düsseldorf-Ilverich) by the sieve method described here below.

Two flocculation auxiliaries were tested:
- Comparative flocculation auxiliary:: copolymer of acrylamide with cationic acrylic acid derivative
- Inventive flocculation auxiliary:: copolymer of acrylamide with cationic acrylic acid derivative and 0.5% non-ionic surfactant (reaction product of a C12-C18 fatty alcohol, ethylene oxide and propylene oxide) applied in the preparation process of the copolymer before the drying process.

In a 600 ml beaker, a 0.1 wt.-% aqueous solution of the respective flocculating auxiliary (500 ± 10 ml) was prepared and sheared by means of a dispersing device "Ultra Turrax T 25 N" with dispersing tool "S 25 N - 18 G" (Janke & Kunkel) at a rotation speed of 24,000 min⁻¹.

Then, a sample of sludge (500 ± 10 ml) was conditioned with a portion of the sheared flocculating auxiliary solution (flocculating auxiliary dose: 200 g(weight solids)/m³) using a four-blade stainless stirrer (RW 20 DZM Janke & Kunkel) at 1000 ± 20 min⁻¹ for 10 ± 0.5 seconds and dewatered by a drainage screen (stainless steel, 150 x 50 mm; 200 µm mesh). The resulting filtrate (centrate) was subjected to a foaming test.

Foam test conditions: 300 ml filtrate, 100 I air/hour, foam height in mm

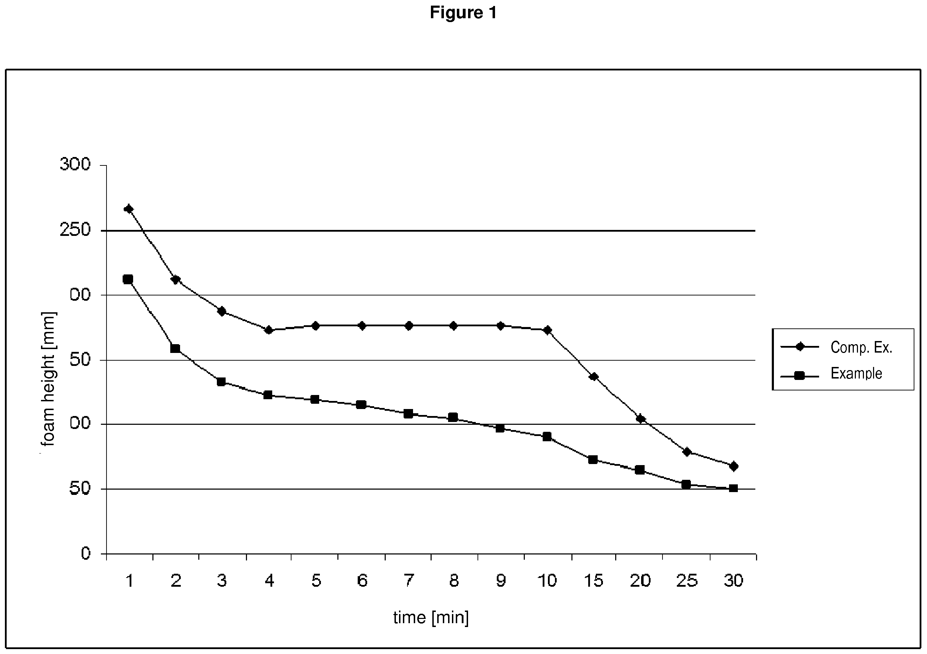

The resulting foam heights over time periods are depicted in the table here below and in Figure 1:

| | foam height (mm) | |
|---|---|---|
| time (min.) | comp. Example | Example 1 |
| 1 | 266 | 212 |
| 2 | 212 | 158 |
| 3 | 187 | 133 |
| 4 | 173 | 122 |
| 5 | 176 | 119 |
| 6 | 176 | 115 |
| 7 | 176 | 108 |
| 8 | 176 | 104 |
| 9 | 176 | 97 |
| 10 | 173 | 90 |
| 15 | 137 | 72 |
| 20 | 104 | 65 |
| 25 | 79 | 54 |
| 30 | 68 | 50 |

A clearly reduced foaming tendency could be seen in the lab trial.

### EXAMPLES 2-4

The inventive flocculation auxiliary of Example 1 was tested at three different wastewater treatment plants (WWTP). Two plants are purely municipal sewage treatment plants, each with a design capacity of 137,000 and 120,000 population equivalents. The third treatment plant has a design capacity of 1,200 000 population equivalent.

All water treatment plants described here set to a degradation of organic constituents in the sludge digestion tanks. Then the sludge is drained with the addition of powdered flocculating auxiliaries using modern high performance decanters.

### EXAMPLE 2

### Design capacity 1.2 million inhabitants.

In this new facility the inflowing water consists of 75% from industry and 25% from municipal sources. The biological process is divided here into high-and low-load range. The resulting excess sludge is thickened using a decanter and then fed to the digester.

The sludge is dewatered by a total of three Sharpless decanters at a rotation speed of 2700 min⁻¹. During the operational testing centrifuge 1 was charged with 40 m³/h sludge. The dosing of the flocculating auxiliary was 265 g/m³. The resulting centrate was fed into a process water tank and after nitrogen elimination and neutralization re-added to the inflow of sewage. Since development of foam would be disruptive approximately 16 l/day of defoamer (suspension of polyethylene wax in mineral oil) are dosed into the centrate, normally.

Comparative operational tests were conducted with the comparative flocculation auxiliary and the inventive flocculation auxiliary according to Example 1. By adding an additional defoamer (suspension of polyethylene wax in mineral oil), the foam height was kept constant.
1) Pump for defoamer when using the comparative flocculation auxiliary: 50 strokes / minute
2) Pump for defoamer when using the inventive flocculation auxiliary: 25 strokes / minute

In summary, the dosage of additional defoamer could be cut by half.

### EXAMPLE 3

### Design capacity 137 000 inhabitants.

Mainly municipal wastewater is processed in this treatment plant. The biological return sludge is thickened using a decanter and then fed to the digester. After a digestion period of 20 days 220 g/m³ flocculating auxiliary are dosed and dehydrated with a modern high performance decanter of the company KHD.

As no antifoam agent is used in this application the formation of foam in the centrate limits the volume flow of the machine. Foam formation is a massive handicap. With no or less foam development, the flow rate and, therefore, productivity can be increased.
1) Maximum throughput when using the comparative flocculation auxiliary: 27 m3/h
2) Maximum throughput when using the inventive flocculation auxiliaryExample 1: 32 m³/h.

I.e. 19% performance increase.

The higher mud flow shortens the run time of the decanter and, thus, saves energy and costs.

### EXAMPLE 4

### Design capacity 120 000 inhabitants

This sewage plant is processing almost exclusively domestic sewage. The sludge is processed in a biology stage, thickened with a flotation and fed to the digester. After an appropriate residence time, the sludge is dewatered. Then 163 g / m³ flocculating auxiliaries is added and the dewatering is performed by using a modern high performance decanter with a throughput of 43 m3/h. Since there is a great tendency to foam a defoamer from Ashland (suspension of a polyethylene wax in mineral oil) is dosed.
1) Output power for the pump for defoaming agent when using the comparative flocculation auxiliary: 120%
2) Output power for the pump for defoaming agent when using the inventive flocculation auxiliary: 20%

In Examples 2-4, no negative effect could be observed on the drainage behavior in the decanter such as lower separation rate or dry solids.

### EXAMPLES 5 TO 11

In a series of experiments (polymerization reactions of acrylamide and various ionic comonomers) the influence of cross-linkers (contained in the starting material and/or specifically added in predetermined amounts) on undesirable gel formation was studied.

In Examples 5, 8, 10 and 11, a technical grade of cationic monomer was employed that already contained about 30 ppm cross-linking monomer (N-allylacrylamide, NAA). In Example 9, an analytical grade of the same cationic monomer was employed that did not contain any detectable amount of cross-linker.

In Examples 5, 6 and 7, N,N'-methylenebisacrylamide (MBA) was separately added as cross-linker in various predetermined amounts. In Examples 8 and 9, N-allylacrylamid (NAA) was separately added as cross-linker in various predetermined amounts.

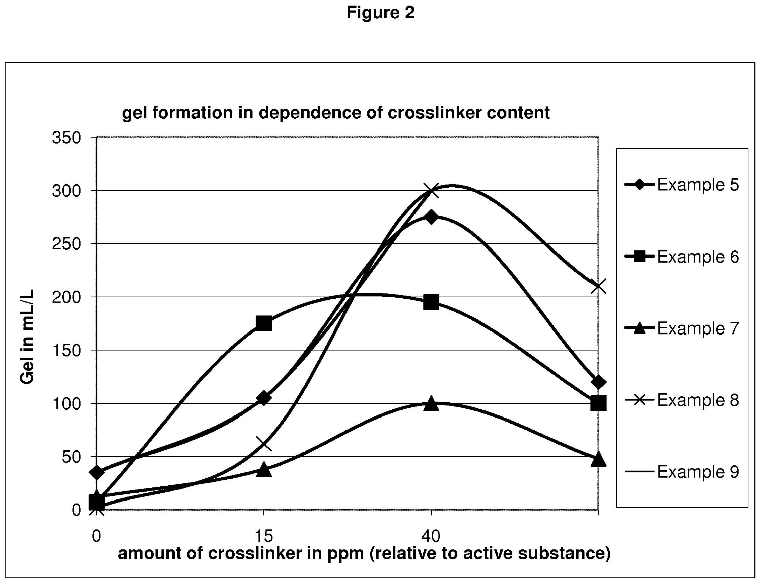

The composition of the reaction mixtures, the experimental conditions as well as the measured salt viscosities and gel amounts are summarized in the table here below. The gel amounts measured for Examples 5 to 9 are additionally depicted in Figure 2:

| batch | cross-linking monomer | | ionic monomer | time degassing | catalysis | | results | | obs. |
|---|---|---|---|---|---|---|---|---|---|
| | [type] | [amount 6] | [type] | [min] | [start temp in °C] | [amount in ppm] | [gel in mL] | salt viscosity [mPas]⁷ | |
| **Example 5** (catalysis: ABAH 500 ppm; TBHP / Nads 10/15 ppm; full light exposure // 1 % Al) | | | | | | | | | |
| **a** | - | 0 | DIMAPA Quat technical ⁴ | nd | -5 | 200 | **35** | 300 | - |
| **b** | MBA | 5 | DIMAPA Quat technical ⁴ | nd | -5 | 200 | **105** | 340 | - |
| **c** | MBA | 10 | DIMAPA Quat technical ⁴ | nd | -5 | 200 | **275** | 770 | 3 |
| **d** | MBA | 200 | DIMAPA Quat technical ⁴ | nd | -5 | 200 | **120** | nd | 1 |

| **Example 6** (catalysis ABAH 500 ppm; full light exposure // 1 % Al) | | | | | | | | | |
|---|---|---|---|---|---|---|---|---|---|
| **a** | - | 0 | ADAME Quat | nd | -5 | 0 | **7** | 1450 | - |
| **b** | MBA | 5 | ADAME Quat | nd | -5 | 0 | **175** | nd | 1 |
| **c** | MBA | 10 | ADAME Quat | nd | -5 | 0 | **195** | nd | 1 |
| **d** | MBA | 200 | ADAME Quat | nd | -5 | 0 | **100** | nd | 1 |
| | | | | | | | | | |

| **Example 7** (catalysis ABAH 500 ppm, TBHP/Nads 1/3 ppm; full light exposure // 1 % Al) | | | | | | | | | |
|---|---|---|---|---|---|---|---|---|---|
| **a** | - | 0 | acrylic acid | nd | -3 | 0 | **12** | 270 | - |
| **b** | MBA | 5 | acrylic acid | nd | -3 | 0 | **38** | 260 | - |
| **c** | MBA | 10 | acrylic acid | nd | -3 | 0 | **100** | nd | 1 |
| **d** | MBA | 200 | acrylic acid | nd | -3 | 0 | **48** | nd | 1 |
| | | | | | | | | | |

| **Example 8** (catalysis: ABAH 500 ppm; TBHP / Nads 10/15 ppm; full light exposure // 1 % Al) | | | | | | | | | |
|---|---|---|---|---|---|---|---|---|---|
| **a** | - | 0 | DIMAPA Quat technical ⁴ | nd | 0 | 150 | **2** | 210 | - |
| **b** | NAA | 10 | DIMAPA Quat technical ⁴ | nd | 0 | 150 | **62** | 300 | - |
| **c** | NAA | 30 | DIMAPA Quat technical ⁴ | nd | 0 | 150 | **300** | 1140 | - |
| **d** | NAA | 100 | DIMAPA Quat technical ⁴ | nd | 0 | 150 | **210** | 310 | - |
| | | | | | | | | | |

| **Example 9** (catalysis: ABAH 500 ppm; TBHP / Nads 10/15 ppm; full light exposure // 1 % Al) | | | | | | | | | |
|---|---|---|---|---|---|---|---|---|---|
| **a** | NAA | 0 | DIMAPA Quat analytical ⁵ | nd | -3 | 100 | **34** | 410 | 2 |
| **b** | NAA | 15 | DIMAPA Quat analytical ⁵ | nd | -3 | 100 | **105** | 530 | 2 |
| **c** | NAA | 40 | DIMAPA Quat analytical ⁵ | nd | -3 | 100 | **300** | 1070 | 2 |
| | | | | | | | | | |

| **Example 10** (catalysis: ABAH 500 ppm; TBHP / Nads 10/15 ppm; full light exposure // 1 % Al) | | | | | | | | | |
|---|---|---|---|---|---|---|---|---|---|
| **a** | - | 0 | DIMAPA Quat technical ⁴ | nd | 0 | 200 | **4** | 200 | - |
| **b** | - | 0 | DIMAPA Quat technical ⁴ | nd | 0 | 100 | **30** | 340 | - |
| **c** | - | 0 | DIMAPA Quat technical ⁴ | <45 | 0 | 150 | **20** | 320 | - |
| **d** | - | 0 | DIMAPA Quat technical ⁴ | 45 | 0 | 100 | **42** | 400 | - |
| | | | | | | | | | |

| **Example 11** (catalysis: ABAH 500 ppm; TBHP / Nads 10/15 ppm; full light exposure // 1 % Al) | | | | | | | | | |
|---|---|---|---|---|---|---|---|---|---|
| **a** | - | 0 | DIMAPA Quat technical ⁴ | nd | -3 | 100 | **22** | 350 | - |
| **b** | MBA | 5 | DIMAPA Quat technical ⁴ | nd | -3 | 100 | **150** | 530 | - |
| **c** | NAA | 10 | DIMAPA Quat technical ⁴ | nd | -3 | 100 | **160** | 620 | - |

| | | | | | | | | | |
|---|---|---|---|---|---|---|---|---|---|
| nd = not determined DIMAPA Quat = N,N,N-trimethylammoniumpropylacrylamide chloride ADAME Quat = N,N,N-trimethylammoniumethyl(meth)acrylate chloride NAA = N-allylacrylamid MBA = N,N'-methylenebisacrylamide ABAH = 2,2'-azo-bis(2-amidinopropane)dihydrochloride TBHP = tertbutylhydroperoxide Nads = sodium disulfite Al = defoamer ¹ completely cross-linked, only swells, measuring viscosity not possible ² starting material not containing detectable amounts of cross-linker ³ conclusions can hardly be drawn from viscosity, as liquid is very diluted and swollen particles disturb measurement by increasing viscosity ⁴ starting material contains about 30 ppm cross-linker (and varying amounts of regulator) ⁵ starting material not containing detectable amounts of cross-linker ⁶ relative to total amount of active substance ⁷ at velocity 10 | | | | | | | | | |

Additional differences between the polymers contained in the composition according to the invention and the polymer of Example 5 have been demonstrated by measuring the particle shape and spherical particle content. By using a PartAn 2001 L, a photo-optical image analyzing system, the non-spherical parameter (NSP), a shape factor of these polymer particles was measured. These measurements showed for the particles of the polymer of Example 5 a deviation of the NSP from an ideal spherical shape of approx. 14% and for the polymers of Example 7 and 9 a deviation of approximately 76%.

When comparing the above experimental data with the teaching of US 5,684,107, the following can be concluded:
When employing the polymer compositions according to the invention in the intended application, products having an excellent water-solubility are needed, as insoluble parts do not provide any functional properties or even cause problems in these applications. In nearly all intended applications some kind of flocculation or coagulation mechanism is the key to product performance. Only water-soluble polyelectrolytes possess the ability to interact with material in the intended way. Further, insoluble parts (gel particles) may lead to clogging of protective filters or, e.g. in paper production, may lead to holes or even breaks of the paper sheets which is a very cost intensive problem for paper manufacturers. Therefore, for the purposes of the polymer dispersions according to the invention, it is always desirable to produce polymer products (e.g. powders) that easily dissolve and form smooth solutions without or only with a very low formation of insoluble parts.

To prove the good solubility of the products according to the invention, solubility tests and gelling tests have been conducted. Based upon long application experience, in standard applications the gel/insoluble limit should certainly not exceed 30 ml/L (cf. values in the 3rd column in above table). For other applications like e.g. paper production, even more demanding limits are set, e.g. below 10 ml/L, below 5 ml/L or even below 1 ml/L. As evidenced by the above experimental data, gel contents below these limits can only be achieved at very low contents or in absence of cross-linkers.

At contents of cross-linker amounting to 50 ppm or more according to US 5,684,107, the resultant products are wide out of specification. The exemplified compositions of US 5,684,107 contain such inacceptable high quantities of cross-linkers. Further, if no cross-linkers would be added to the reaction mixtures according to US 5,684,107, the subsequent azeotropic (in general thermal) dewatering step in presence of polyalkylene glycol would lead to crosslinking/gel formation with acid groups connected to the polymer backbone.

Furthermore, the polymer compositions according to the invention are preferably only water-based in contrast to the products in US 5,684,107 which are water-in-oil based polymers. Further, the polymer compositions according to the invention do not need to be dewatered and other solvents or oils do not need to be removed. Thus, the polymer compositions according to the invention are easier to manufacture and have a better ecological profile.

## Claims

1. A composition comprising
(i) a non-ionic surfactant R¹-O-A-O-R²,
wherein
- the residue -O-A-O- is derived from a polyalkylene glycol HO-A-OH that comprises 2-130 monomer units derived from ethylene glycol and 0-60 monomer units derived from propylene glycol; and
- R¹ is selected from the group consisting of -H, -(C₈-C₂₀)-alkyl, -(C₈-C₂₀)-alkenyl, -(C=O)-(C₈-C₂₀)-alkyl and -(C=O)-(C₈-C₂₀)-alkenyl, and
- R² is selected from the group consisting of -H, -(C₁-C₆)-alkyl, -benzyl, -(C=O)-(C₈-C₂₀)-alkyl and -(C=O)-(C₈-C₂₀)-alkenyl; and
(ii) a water-soluble ionic polymer,
wherein the water-soluble ionic polymer is derived from a monomer composition containing
a) one or more non-ionic ethylenically unsaturated monomers, and/or
b) one or more cationic ethylenically unsaturated monomers, and/or
c) one or more anionic ethylenically unsaturated monomers; and
wherein the water-soluble ionic polymer is derived from a monomer composition
(i) not comprising any cross-linking monomers, or
(ii) containing not more than 50 ppm cross-linking monomers, relative to the total content of monomers in the monomer composition;
wherein the non-ionic surfactant R¹-O-A-O-R² is present in an amount of from 0.05 wt.-% to 2.0 wt.-%, based on the total weight of the composition; and
wherein the relative weight ratio of the non-ionic surfactant R¹-O-A-O-R² to the ionic polymer is within the range of from 0.05 : 100 to 2 : 100.

2. The composition according to claim 1, which is a solid.

3. The composition according to claim 1 or 2, wherein the residue -O-A-O- is derived from a polyalkylene glycol HO-A-OH that comprises monomer units derived from ethylene glycol or a mixture of ethylene glycol and propylene glycol.

4. The composition according to claim 3, wherein the monomer units derived from the ethylene glycol and the monomer units derived from the propylene glycol are present in any order or form two or more separate blocks.

5. The composition according to any of the preceding claims, wherein the surfactant R¹-O-A-O-R² can be represented by the general formula (A) 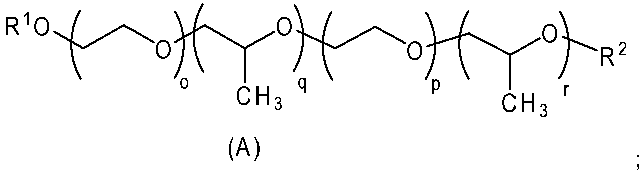 wherein
R¹ is selected from the group consisting of -H, -(C₈-C₂₀)-alkyl, -(C₈-C₂₀)-alkenyl, -(C=O)-(C₈-C₂₀)-alkyl and -(C=O)-(C₈-C₂₀)-alkenyl,
R² is selected from the group consisting of -H, -(C₁-C₆)-alkyl, -benzyl, -(C=O)-(C₈-C₂₀)-alkyl and -(C=O)-(C₈-C₂₀)-alkenyl,
o and p are integers of from 0 to 130, and the sum of o and p is within the range of from 2 to 130;
q and r are integers of from 0 to 60; and the sum of q and r is within the range of from 0 to 60;
preferably with the proviso that if R¹ and R² are both H, the sum of q and r may not be 0.

6. The composition according to any of the preceding claims, wherein the non-ionic surfactant R¹-O-A-O-R² has a HLB not exceeding 14 and/or the ionic polymer is water-soluble or water-swellable.

7. The composition according to any of the preceding claims, wherein
the non-ionic ethylenically unsaturated monomer is selected from the group consisting of
(a1) non-ionic monomers according to general formula (I) 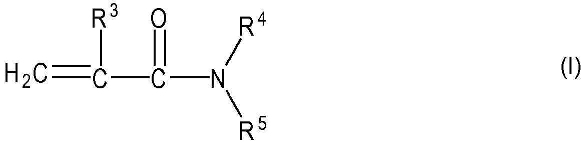 wherein
R³ means hydrogen or C₁-C₃-alkyl, and
R⁴ and R⁵ mean, independently of each other, hydrogen, C₁-C₅-alkyl or C₁-C₅-hydroxyalkyl; and
(a2) non-ionic amphiphilic monomers according to general formula (II) 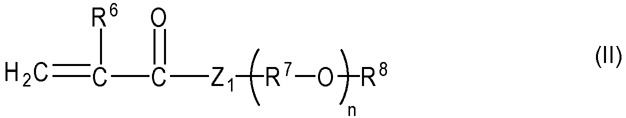 wherein
Z₁ means O, NH or NR⁹ with R⁹ being C₁-C₃-alkyl,
R⁶ means hydrogen or C₁-C₃-alkyl,
R⁷ means C₂-C₆-alkylene,
R⁸ means hydrogen, C₈-C₃₂-alkyl, C₈-C₃₂-aryl and/or C₈-C₃₂-aralkyl, and
n means an integer between 1 and 50;
the cationic ethylenically unsaturated monomer is a monomer according to general formula (III) 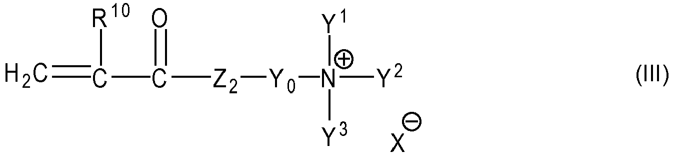 wherein
R¹⁰ means hydrogen or C₁-C₃-alkyl;
Z₂ means O, NH or NR¹¹ with R¹¹ being C₁-C₃-alkyl; and
Y₀ means C₂-C₆-alkylene, possibly substituted with one or more hydroxy groups,
Y₁, Y₂, Y₃, independently of each other, mean C₁-C₆-alkyl, and
X⁻ means halogen, pseudo-halogen, acetate or SO₄CH₃⁻; and
the anionic ethylenically unsaturated monomer is selected from the group consisting of
(c1) ethylenically unsaturated carboxylic acids, carboxylic anhydrides, and water-soluble alkali metal salts, alkaline earth metal salts, and ammonium salts thereof,
(c2) ethylenically unsaturated sulfonic acids and water-soluble alkali metal salts, alkaline earth metal salts, and ammonium salts thereof,
(c3) ethylenically unsaturated phosphonic acids and water-soluble alkali metal salts, alkaline earth metal salts, and ammonium salts thereof, and
(c4) sulfomethylated and/or phosphonomethylated acrylamides and water-soluble alkali metal salts, alkaline earth metal salts, and ammonium salts thereof.

8. The composition according to any of the preceding claims further containing an ionic polymeric dispersant.

9. The composition according to any of the preceding claims, which is obtainable by a process comprising the steps
(i) subjecting an aqueous reaction mixture comprising
a) one or more non-ionic ethylenically unsaturated monomers, and/or
b) one or more cationic ethylenically unsaturated monomers, and/or
c) one or more anionic ethylenically unsaturated monomers,
d) optionally the ionic polymeric dispersant, and
e) optionally the non-ionic surfactant,
to radical polymerization by adiabatic gel polymerization;
(ii) optionally crushing or chopping the gel obtained from step (i);
(iii) drying the material obtained from step (i) or (ii) at a temperature of 70 to 150 °C;
(iv) optionally grinding the material obtained from step (iii); and
(v) adding the non-ionic surfactant R¹-O-A-O-R²;
wherein step (v) is performed before step (i), after step (iv) and/or at any time in between.

10. Use of the composition according to any of the preceding claims
- as a flocculating auxiliary in the sedimentation, flotation or filtration of solids,
- as a thickener, or
- as additive in papermaking.

11. Use of the composition according to claims 1 to 9 as a flocculating auxiliary for purifying waste water or conditioning potable water.

## Patentansprüche

1. Zusammensetzung umfassend
(i) ein nicht-ionisches Tensid R¹-O-A-O-R²,
worin
- der Rest -O-A-O- von einem Polyalkylenglykol HO-A-OH abgeleitet ist, das 2-130 Monomereinheiten, die sich von Ethylenglykol ableiten, und 0-60 Monomereinheiten, die sich von Propylenglycol ableiten, umfasst; und
- R¹ aus der Gruppe ausgewählt ist, bestehend aus -H, -(C₈-C₂₀)-Alkyl, -(C₈-C₂₀)-Alkenyl, -(C=O)-(C₈-C₂₀)-Alkyl und -(C=O)-(C₈-C₂₀)-Alkenyl, und
- R² aus der Gruppe ausgewählt ist, bestehend aus -H, -(C₁-C₆)-Alkyl, -Benzyl, -(C=O)-(C₈-C₂₀)-Alkyl und -(C=O)-(C₈-C₂₀)-Alkenyl; und
(ii) ein wasserlösliches ionisches Polymer,
worin das wasserlösliche ionische Polymer von einer Monomerzusammensetzung abgeleitet ist, die
a) ein oder mehrere nicht-ionische ethylenisch ungesättigte Monomere und/oder
b) ein oder mehrere kationische ethylenisch ungesättigte Monomere und/oder
c) ein oder mehrere anionische ethylenisch ungesättigte Monomere enthält; und
worin das wasserlösliche ionische Polymer von einer Monomerzusammensetzung abgeleitet ist, die
(i) keine quervernetzenden Monomere umfasst, oder
(ii) nicht mehr als 50 ppm quervernetzende Monomere, bezogen auf den Gesamtgehalt an Monomeren in der Monomerenzusammensetzung, enthält;
worin das nicht-ionisches Tensid R¹-O-A-O-R² in einer Menge von 0,05 Gew.-% bis 2,0 Gew.-%, basierend auf dem Gesamtgewicht der Zusammensetzung, vorhanden ist; und
worin das relative Gewichtsverhältnis von dem nicht-ionischen Tensid R¹-O-A-O-R²zu dem ionischen Polymer im Bereich von 0,05:100 bis 2:100 liegt.

2. Zusammensetzung nach Anspruch 1, die ein Feststoff ist.

3. Zusammensetzung nach Anspruch 1 oder 2, worin der Rest -O-A-O- von einem Polyalkylenglykol HO-A-OH abgeleitet ist, der Monomereinheiten umfasst, die sich von Ethylenglykol oder einer Mischung von Ethylenglykol und Propylenglykol ableiten.

4. Zusammensetzung nach Anspruch 3, worin die Monomereinheiten, die sich von dem Ethylenglykol ableiten, und die Monomereinheiten, die sich von dem Propylenglykol ableiten, in einer beliebigen Reihenfolge vorhanden sind oder zwei oder mehr getrennte Blöcke bilden.

5. Zusammensetzung nach einem der vorhergehenden Ansprüche, worin das Tensid R¹-O-A-O-R² durch die allgemeine Formel (A) dargestellt werden kann 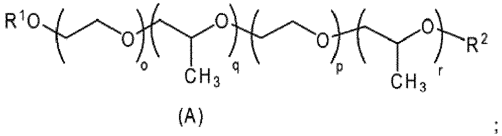 worin
R¹ aus der Gruppe ausgewählt ist, bestehend aus -H, -(C₈-C₂₀)-Alkyl, -(C₈-C₂₀)-Alkenyl, -(C=O)-(C₈-C₂₀)-Alkyl und -(C=O)-(C₈-C₂₀)-Alkenyl, und
R² aus der Gruppe ausgewählt ist, bestehend aus -H, -(C₁-C₆)-Alkyl, -Benzyl, -(C=O)-(C₈-C₂₀)-Alkyl und -(C=O)-(C₈-C₂₀)-Alkenyl; und
o und p ganze Zahlen von 0 bis 130 sind, und die Summe von o und p im Bereich von 2 bis 130 liegt;
q und r ganze Zahlen von 0 bis 60 sind; und die Summe von q und r im Bereich von 0 bis 60 liegt;
vorzugsweise mit der Maßgabe, dass, wenn R¹ und R² beide H sind, die Summe von q und r nicht 0 sein kann.

6. Zusammensetzung nach einem der vorhergehenden Ansprüche, worin das nicht-ionische Tensid R¹-O-A-O-R² einen HLB von nicht mehr als 14 aufweist und/oder das ionische Polymer wasserlöslich oder wasserquellbar ist.

7. Zusammensetzung nach einem der vorhergehenden Ansprüche, worin das nicht-ionische ethylenisch ungesättigte Monomer aus der Gruppe ausgewählt ist, bestehend aus
(a1) nicht-ionischen Monomeren nach der allgemeinen Formel (I) 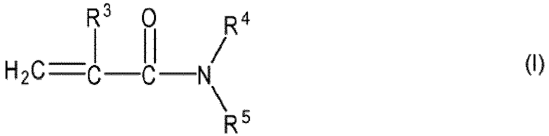 worin
R³ Wasserstoff oder C₁-C₃-Alkyl bedeutet, und
R⁴ und R⁵ unabhängig voneinander Wasserstoff, C₁-C₅-Alkyl oder C₁-C₅-Hydroxyalkyl bedeuten; und
(a2) nicht-ionischen amphiphilen Monomeren nach der allgemeinen Formel (II) 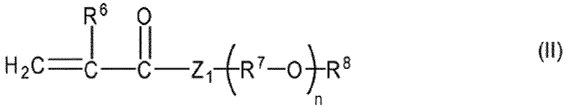 worin
Z O, NH oder NR⁹ bedeutet, wobei R⁹ C₁-C₃-Alkyl ist,
R⁶ Wasserstoff oder C₁-C₃-Alkyl bedeutet,
R⁷ C₂-C₆-Alkylen bedeutet,
R⁸ Wasserstoff, C₈-C₃₂-Alkyl, C₈-C₃₂-Aryl und/oder C₈-C₃₂-Aralkyl bedeutet, und
n eine ganze Zahl zwischen 1 und 50 bedeutet; und
das kationische ethylenisch ungesättigte Monomer ein Monomer nach der allgemeinen Formel (III) ist 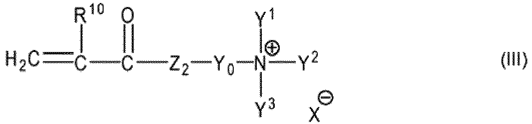 worin
R¹⁰ Wasserstoff oder C₁-C₃-Alkyl bedeutet;
Z₂ O, NH oder NR¹¹ bedeutet, wobei R¹¹ C₁-C₃-Alkyl ist; und
Y₀ C₂-C₆-Alkylen bedeutet, gegebenenfalls substituiert mit einer oder mehreren Hydroxygruppen,
Y₁, Y₂, Y₃ unabhängig voneinander C₁-C₆-Alkyl bedeuten, und
X⁻ Halogen, Pseudohalogen, Acetat oder SO₄CH₃⁻ bedeutet; und
das anionische ethylenisch ungesättigte Monomer aus der Gruppe ausgewählt ist, bestehend aus
(c1) ethylenisch ungesättigten Carbonsäuren, Carbonsäureanhydriden und wasserlöslichen Alkalimetallsalzen, Erdalkalimetallsalzen und Ammoniumsalzen davon,
(c2) ethylenisch ungesättigten Sulfonsäuren und wasserlöslichen Alkalimetallsalzen, Erdalkalimetallsalzen und Ammoniumsalzen davon,
(c3) ethylenisch ungesättigten Phosphonsäuren und wasserlöslichen Alkalimetallsalzen, Erdalkalimetallsalzen und Ammoniumsalzen davon, und
(c4) sulfomethylierten und/oder phosphonomethylierten Acrylamiden und wasserlösliche Alkalimetallsalze, Erdalkalimetallsalze und Ammoniumsalzen davon.

8. Zusammensetzung nach einem der vorhergehenden Ansprüche, die weiterhin ein ionisches polymeres Dispergiermittel enthält.

9. Zusammensetzung nach einem der vorhergehenden Ansprüche, die erhältlich ist durch ein Verfahren, umfassend die Schritte
(i) Unterziehen einer wässrigen Reaktionsmischung, umfassend
a) ein oder mehrere nicht-ionische ethylenisch ungesättigte Monomere und/oder
b) ein oder mehrere kationische ethylenisch ungesättigte Monomere und/oder
c) ein oder mehrere anionische ethylenisch ungesättigte Monomere,
d) gegebenenfalls das ionische polymere Dispergiermittel, und
e) gegebenenfalls das nichtionische Tensid
einer radikalischen Polymerisation durch adiabatische Gelpolymerisation;
(ii) gegebenenfalls Zerkleinern oder Zerhacken des in Schritt (i) erhaltenen Gels;
(iii) Trocknen des aus Schritt (i) oder (ii) erhaltenen Materials bei einer Temperatur von 70 bis 150 °C;
(iv) gegebenenfalls Mahlen des aus Schritt (iii) erhaltenen Materials; und
(v) Zugeben des nichtionischen Tensids R¹-O-A-O-R²;
worin Schritt (v) vor Schritt (i), nach Schritt (iv) und/oder zu irgendeinem Zeitpunkt dazwischen durchgeführt wird.

10. Verwendung der Zusammensetzung nach einem der vorhergehenden Ansprüche
- als Flockungshilfsmittel bei der Sedimentation, Flotation oder Filtration von Feststoffen,
- als ein Verdicker, oder
- als Zusatzstoff in der Papierherstellung.

11. Verwendung der Zusammensetzung nach den Ansprüchen 1 bis 9 als Flockungshilfsmittel zum Reinigen von Abwasser oder Behandeln von Trinkwasser.

## Revendications

1. Composition comprenant
(i) un tensioactif non ionique R¹-O-A-O-R²,
dans lequel
- le résidu -O-A-O- est dérivé d'un polyalkylène glycol HO-A-OH qui comprend entre 2 et 130 motifs monomères dérivés de l'éthylène glycol et entre 0 et 60 motifs monomères dérivés du propylène glycol ; et
- R¹ est choisi dans le groupe constitué de -H, - (C₈-C₂₀) -alkyle, - (C₈-C₂₀) -alcényle, - (C=O) - (C₈-C₂₀) -alkyle et - (C=O) - (C₈-C₂₀) -alcényle, et
- R² est choisi dans le groupe constitué de -H, - (C₁-C₆) -alkyle, -benzyle, - (C=O) - (C₈-C₂₀) -alkyle et - (C=O) - (C₈-C₂₀) -alcényle ; et
(ii) un polymère ionique soluble dans l'eau,
dans lequel le polymère ionique soluble dans l'eau est dérivé d'une composition de monomères contenant
a) un ou plusieurs monomères non ioniques éthyléniquement insaturés, et/ou
b) un ou plusieurs monomères cationiques éthyléniquement insaturés, et/ou
c) un ou plusieurs monomères anioniques éthyléniquement insaturés ; et
dans lequel le polymère ionique soluble dans l'eau est dérivé d'une composition de monomères
(i) ne comprenant aucun monomère de réticulation, ou
(ii) ne contenant pas plus de 50 ppm de monomères de réticulation, par rapport à la teneur totale en monomères dans la composition de monomères ;
dans laquelle le tensioactif non ionique R¹-O-A-O-R² est présent en une quantité comprise entre 0,05 % en poids et 2,0 % en poids, en fonction du poids total de la composition ; et
dans laquelle le rapport de poids relatif du tensioactif non ionique R¹-O-A-O-R² au polymère ionique est compris dans la plage allant de 0,05:100 à 2:100.

2. Composition selon la revendication 1, qui est un solide.

3. Composition selon la revendication 1 ou la revendication 2, dans laquelle le résidu -O-A-O- est dérivé d'un polyalkylène glycol HO-A-OH qui comprend des motifs monomères dérivés de l'éthylène glycol ou d'un mélange d'éthylène glycol et de propylène glycol.

4. Composition selon la revendication 3, dans laquelle les motifs de monomères dérivés de l'éthylène glycol et les motifs monomères dérivés du propylène glycol sont présents dans un ordre quelconque ou forment au moins deux blocs séparés.

5. Composition selon l'une quelconque des revendications précédentes, dans laquelle le tensioactif R¹-O-A-O-R² peut être représenté par la formule générale (A) 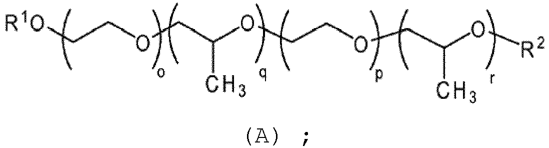 dans laquelle
R¹ est choisi dans le groupe constitué de -H, -(C₈-C₂₀) -alkyle, - (C₈-C₂₀) -alcényle, - (C=O) - (C₈-C₂₀) -alkyle et - (C=O) - (C₈-C₂₀) -alcényle,
R² est choisi dans le groupe constitué de -H, -(C₁-C₆)-alkyle, -benzyle, - (C=O) - (C₈-C₂₀) -alkyle et - (C=O) - (C₈-C₂₀) -alcényle,
o et p sont des nombres entiers compris entre 0 et 130, et la somme de o et p est comprise dans la plage allant de 2 à 130 ;
q et r sont des nombres entiers compris entre 0 et 60, et la somme de q et r est comprise dans la plage allant de 0 à 60 ;
de préférence à condition que si R¹ et R² représentent tous les deux H, la somme de q et r peut ne pas valoir 0.

6. Composition selon l'une quelconque des revendications précédentes, dans laquelle le tensioactif non ionique R¹-O-A-O-R² présente un HLB ne dépassant pas 14 et/ou le polymère ionique est soluble dans l'eau ou capable de gonfler dans l'eau.

7. Composition selon l'une quelconque des revendications précédentes, dans laquelle
le monomère non ionique éthyléniquement insaturé est choisi dans le groupe constitué
(a1) de monomères non ioniques conformes à la formule générale (I) 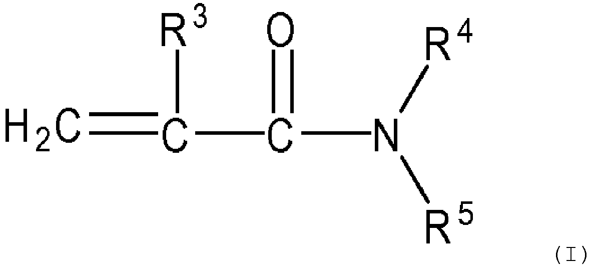 dans laquelle
R³ représente l'hydrogène ou un C₁-C₃-alkyle, et
R⁴ et R⁵ représentent, indépendamment l'un de l'autre, l'hydrogène, un C₁-C₃-alkyle, ou un C₁-C₅-hydroxyalkyle ; et
(a2) de monomères amphiphiles non ioniques conformes à la formule générale (II) 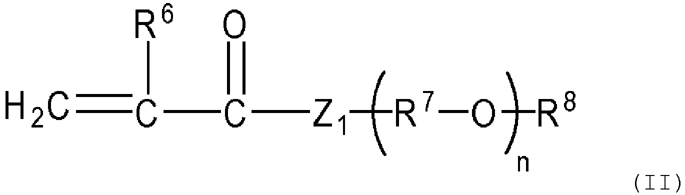 dans laquelle
Z₁ représente O, NH ou NR⁹ avec R⁹ représentant C₁-C₃-alkyle,
R⁶ représente l'hydrogène ou un C₁-C₃-alkyle,
R⁷ représente C₂-C₆-alkylene,
R⁸ représente l'hydrogène, C₈-C₃₂-alkyle, C₈-C₃₂-aryle et/ou C₈-C₃₂-aralkyle, et
n représente un nombre entier compris entre 1 et 50 ;
le monomère cathionique éthyléniquement insaturé est un monomère conforme à la formule générale (III) 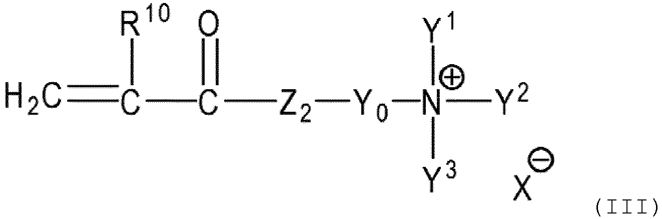 dans laquelle
R¹⁰ représente l'hydrogène ou un C₁-C₃-alkyle ;
Z₂ représente O, NH ou NR¹¹ avec R¹¹ représentant C₁-C₃-alkyle ; et
Y₀ représente C₂-C₆-alkylene, éventuellement substitué par un ou plusieurs groupes hydroxy,
Y₁, Y₂, Y₃ représentent indépendamment l'un de l'autre, C₁-C₆-alkyle, et
X⁻ représente un halogene, un pseudo-halogene, un acétate ou SO4CH3- ; et
le monomère anionique éthyléniquement insaturé est choisi dans le groupe constitué
(c1) d'acides carboxyliques éthyléniquement insaturés, d'anhydrides d'acide carboxyliques et de sels métalliques alkali solubles dans l'eau, de sels métalliques alcalino-terreux et de sels d'ammonium de ces derniers,
(c2) d'acides sulphoniques éthyléniquement insaturés et de sels métalliques alkali solubles dans l'eau, de sels métalliques alcalino-terreux et de sels d'ammonium de ces derniers,
(c3) d'acides phopsphoniques éthyléniquement insaturés et de sels métalliques alkali solubles dans l'eau, de sels métalliques alcalino-terreux et de sels d'ammonium de ces derniers, et
(c4) d'acrylamides sulfométhylés et/ou phosphonométhylés et de sels métalliques alkali solubles dans l'eau, de sels métalliques alcalino-terreux et de sels d'ammonium de ces derniers.

8. Composition selon l'une quelconque des revendications précédentes comprenant en outre un dispersant polymérique ionique.

9. Composition selon l'une quelconque des revendications précédentes, qui peut être obtenue au moyen d'un procédé comprenant les étapes consistant à
(i) assujettir un mélange réactionnel aqueux comprenant
a) un ou plusieurs monomères non ioniques éthyléniquement insaturés, et/ou
b) un ou plusieurs monomères cationiques éthyléniquement insaturés, et/ou
c) un ou plusieurs monomères anioniques éthyléniquement insaturés,
d) éventuellement le dispersant polymérique ionique, et
e) éventuellement le tensioactif non ionique,
à une polymérisation radicalaire au moyen d'une polymérisation adiabatique sur gel ;
(ii) éventuellement écraser ou découper le gel obtenu lors de l'étape (i) ;
(iii) sécher le matériau obtenu lors de l'étape (i) ou (ii) à une température comprise entre 70 et 150 °C ;
(iv) éventuellement broyer le matériau obtenu lors de l'étape (iii) ; et
(v) ajouter le tensioactif non ionique R¹-O-A-O-R² ; dans laquelle l'étape (v) est réalisée avant l'étape (i), après l'étape (iv) et/ou à tout moment entre-temps.

10. Utilisation de la composition selon l'une quelconque des revendications précédentes
- en tant qu'auxiliaire de floculation dans la sédimentation, la flottaison ou la filtration de matières solides,
- entant qu'épaississant, ou
- en tant qu'additif dans la fabrication du papier.

11. Utilisation de la composition selon l'une quelconque des revendications 1 à 9 en tant qu'auxiliaire de floculation destiné à la purification d'eau usée ou au conditionnement d'eau potable.
